# EUROPEAN PATENT APPLICATION

(11) **EP 4 503 300 A1**
(43) Date of publication of application: **05.02.2025**
(21) Application number: 23779465.6
(22) Date of filing: 10.03.2023
(51) Int. Cl.: H01M 50/403, H01M 10/0566, H01M 50/414, H01M 50/443, H01M 50/449, H01M 50/451, H01M 50/46

(54) **SLURRY COMPOSITION FOR NONAQUEOUS SECONDARY BATTERY FUNCTIONAL LAYERS, SEPARATOR FOR NONAQUEOUS SECONDARY BATTERIES, AND NONAQUEOUS SECONDARY BATTERY**

(30) Priority: 31.03.2022 JP 2022061294
(71) Applicant: Zeon Corporation, Tokyo 100-8246 (JP)
(72) Inventor: MATSUNO, Hirohiko, Tokyo 100-8246 (JP)
(74) Representative: Maiwald GmbH
(86) International application number: PCT/JP2023/009444
(87) International publication number: WO 2023/189442

(57) **Abstract**

A slurry composition for a non-aqueous secondary battery functional layer contains a particulate polymer having a glass-transition temperature within a specific range and a water-soluble polymer including a sulfo group-containing monomer unit in a proportion of 3 mass% or more.

## Description

### TECHNICAL FIELD

The present disclosure relates to a slurry composition for a non-aqueous secondary battery functional layer, a separator for a non-aqueous secondary battery, and a non-aqueous secondary battery.

### BACKGROUND

Non-aqueous secondary batteries (hereinafter, also referred to simply as "secondary batteries") such as lithium ion secondary batteries have characteristics such as compact size, light weight, high energy-density, and the ability to be repeatedly charged and discharged, and are used in a wide variety of applications.

A secondary battery generally includes battery members such as electrodes (positive electrode and negative electrode) and a separator that isolates the positive electrode and the negative electrode from each other and prevents short-circuiting between the positive and negative electrodes. Moreover, a porous membrane layer for improving heat resistance and strength, an adhesive layer aimed at improving adhesiveness between battery members, or the like (hereinafter, such layers are also referred to generally as "functional layers") may be provided at the surface of an electrode and/or separator. Specifically, electrodes that further include a functional layer formed on an electrode substrate in which an electrode mixed material layer is provided on a current collector and separators that include a functional layer formed on a separator substrate have been used as battery members.

Various studies have been conducted in relation to compositions for forming functional layers with the aim of enhancing electrochemical characteristics of an obtained secondary battery. For example, Patent Literature (PTL) 1 and 2 disclose a separator for a secondary battery including a layer that contains a water-soluble acrylic binder, a binder differing from the water-soluble acrylic binder, and inorganic particles. Moreover, PTL 3 and 4, for example, disclose compounding a particulate polymer having a glass-transition temperature that satisfies a specific condition as a binder component compounded in a composition for a functional layer.

### CITATION LIST

### Patent Literature

PTL 1: KR10-2071382B1
PTL 2: JP6901234B2
PTL 3: WO2013/151144A1
PTL 4: WO2020/175025A1

### SUMMARY

### (Technical Problem)

In production of a secondary battery, it is necessary for battery members that include a functional layer to have a low tendency to undergo blocking via the functional layer (hereinafter, referred to as "blocking resistance") even when such battery members including a functional layer are temporarily stored in a stacked state. Moreover, when an electrolyte solution is injected into a case housing battery members in an inner part thereof in production of a secondary battery, it is preferable that the electrolyte solution can permeate well into the battery members (i.e., that electrolyte solution injectability is excellent). Furthermore, it is also necessary for a secondary battery to have excellent cycle characteristics under high temperature. However, in the case of a functional layer that is formed using a composition for a functional layer according to a conventional technique such as described above, there is room for improvement in terms of increasing blocking resistance and realizing high levels of both electrolyte solution injectability and high-temperature cycle characteristics in a secondary battery including the functional layer.

Accordingly, one object of the present disclosure is to provide a slurry composition for a non-aqueous secondary battery functional layer that is capable of providing a functional layer having excellent blocking resistance and that is also capable of providing a secondary battery in which high levels of both electrolyte solution injectability and high-temperature cycle characteristics can be realized.

Another object of the present disclosure is to provide a separator for a non-aqueous secondary battery that has excellent blocking resistance and that makes it possible to realize high levels of both electrolyte solution injectability and high-temperature cycle characteristics of an obtained secondary battery.

Another object of the present disclosure is to provide a non-aqueous secondary battery having excellent electrolyte solution injectability and high-temperature cycle characteristics.

### (Solution to Problem)

The inventor conducted diligent studies with the aim of solving the problem set forth above and focused on properties of a water-soluble polymer and a particulate polymer that are used in formation of a functional layer. Moreover, the inventor made a new discovery that when the glass-transition temperature of the particulate polymer is within a specific range and when the water-soluble polymer includes a sulfo group-containing monomer unit in a proportion of 3 mass% or more, it is possible to provide a functional layer having excellent blocking resistance and it is also possible to provide a non-aqueous secondary battery having excellent electrolyte solution injectability and high-temperature cycle characteristics. In this manner, the inventor completed the present disclosure.

Specifically, with the aim of advantageously solving the problem set forth above, [1] a presently disclosed slurry composition for a non-aqueous secondary battery functional layer comprises a particulate polymer and a water-soluble polymer, wherein the particulate polymer has at least one glass-transition temperature of not lower than 30°C and not higher than 95°C, and the water-soluble polymer includes a sulfo group-containing monomer unit in a proportion of 3.0 mass% or more. Through a slurry composition for a functional layer that contains a particulate polymer having a glass-transition temperature in the temperature range set forth above and a water-soluble polymer including a sulfo group-containing monomer unit in a proportion of 3 mass% or more in this manner, it is possible to increase blocking resistance of an obtained functional layer and to realize high levels of both electrolyte solution injectability and high-temperature cycle characteristics of an obtained secondary battery.

Note that the "glass-transition temperature" of the particulate polymer is a value that is defined based on a differential scanning calorimetry (DSC) curve, and that in the case of a DSC curve having a plurality of peaks, the temperature at which a peak of largest displacement is displayed is taken to be the glass-transition temperature of that polymer. Also note that in a case in which a plurality of peaks of equal displacement are detected and in which those peaks have a maximum value among detected peaks, the average value thereof is taken to be the glass-transition temperature of the polymer. Moreover, the phrase "includes a monomer unit" as used in the present specification means that "a repeating unit derived from that monomer is included in a polymer obtained using the monomer". Furthermore, when a polymer is said to be "water-soluble", this means that when 0.5 g of the polymer is dissolved in 100 g of water at a temperature of 25°C, insoluble content is less than 1.0 mass%. Also, the "proportional content (mass%)" of each monomer unit (each repeating unit) included in the water-soluble polymer can be measured by a nuclear magnetic resonance (NMR) method such as ¹H-NMR or ¹³C-NMR.
[2] In the slurry composition for a non-aqueous secondary battery functional layer according to the foregoing [1], the particulate polymer preferably has a core-shell structure. When the particulate polymer has a core-shell structure, adhesiveness of a functional layer can be increased, and cycle characteristics of an obtained secondary battery can be even further enhanced.
[3] In the slurry composition for a non-aqueous secondary battery functional layer according to the foregoing [1] or [2], the particulate polymer preferably has a volume-average particle diameter of not less than 0.25 µm and not more than 5 µm. When the volume-average particle diameter of the particulate polymer is within the range set forth above, adhesiveness of an obtained functional layer can be increased, and internal resistance of a secondary battery can be reduced. Note that the "volume-average particle diameter" of the particulate polymer refers to the particle diameter D50 at which, in a particle diameter distribution (by volume) measured using a laser diffraction particle size analyzer, cumulative volume calculated from a small diameter end of the distribution reaches 50%, and, more specifically, can be measured by a method described in the EXAMPLES section of the present specification.
[4] In the slurry composition for a non-aqueous secondary battery functional layer according to any one of the foregoing [1] to [3], the water-soluble polymer preferably has a weight-average molecular weight of not less than 50,000 and not more than 1,000,000. Adhesiveness of a functional layer can be improved when the weight-average molecular weight of the water-soluble polymer is not less than the lower limit set forth above, whereas dispersibility of the slurry composition increases, the resistance of an obtained functional layer can be reduced, and the internal resistance of a secondary battery can be reduced when the weight-average molecular weight of the water-soluble polymer is not more than the upper limit set forth above.
[5] The slurry composition for a non-aqueous secondary battery functional layer according to any one of the foregoing [1] to [4] may further comprise heat-resistant particles. When the slurry composition contains heat-resistant particles, it is possible to suitably produce a functional layer that displays a function of increasing heat resistance of a battery member.
[6] Moreover, with the aim of advantageously solving the problem set forth above, a presently disclosed separator for a non-aqueous secondary battery comprises: a separator substrate; and a functional layer formed on at least part of at least one surface of the separator substrate, wherein the functional layer is a dried product of the slurry composition for a non-aqueous secondary battery functional layer according to any one of the foregoing [1] to [5]. A separator that includes a separator substrate and a functional layer that is a dried product of any one of the slurry compositions set forth above in this manner has excellent blocking resistance and makes it possible to realize high levels of both electrolyte solution injectability and high-temperature cycle characteristics of an obtained secondary battery.
[7] Furthermore, with the aim of advantageously solving the problem set forth above, a presently disclosed non-aqueous secondary battery comprises a positive electrode, a negative electrode, a separator, and an electrolyte solution, wherein the separator is the separator for a non-aqueous secondary battery according to the foregoing [6]. A secondary battery that includes the separator set forth above in this manner can realize high levels of both electrolyte solution injectability and high-temperature cycle characteristics.

### (Advantageous Effect)

According to the present disclosure, it is possible to provide a slurry composition for a non-aqueous secondary battery functional layer that is capable of providing a functional layer having excellent blocking resistance and that is also capable of providing a secondary battery in which high levels of both electrolyte solution injectability and high-temperature cycle characteristics can be realized.

Moreover, according to the present disclosure, it is possible to provide a separator for a non-aqueous secondary battery that has excellent blocking resistance and that makes it possible to realize high levels of both electrolyte solution injectability and high-temperature cycle characteristics of an obtained secondary battery.

Furthermore, according to the present disclosure, it is possible to provide a non-aqueous secondary battery having excellent electrolyte solution injectability and high-temperature cycle characteristics.

### DETAILED DESCRIPTION

The following provides a detailed description of embodiments of the present disclosure.

The presently disclosed slurry composition for a non-aqueous secondary battery functional layer may be used as a material in production of a functional layer included in a battery member such as a separator or an electrode. Moreover, the presently disclosed separator for a non-aqueous secondary battery includes a functional layer that is formed of a dried product of the presently disclosed slurry composition for a non-aqueous secondary battery functional layer. Furthermore, the presently disclosed non-aqueous secondary battery includes the presently disclosed separator for a non-aqueous secondary battery. Note that the functional layer may be an adhesive layer that displays adhesive capability for adhering a battery member including the functional layer and another battery member that is an adherend, or may be a heat-resistant adhesive layer that contains heat-resistant particles and that can also display a function of heat resistance in addition to adhesive capability.

### (Slurry composition for non-aqueous secondary battery functional layer)

The presently disclosed slurry composition for a non-aqueous secondary battery functional layer contains a particulate polymer and a water-soluble polymer and can optionally further contain a solvent and other components.

The particulate polymer that is contained in the presently disclosed slurry composition has at least one glass-transition temperature in a temperature range of not lower than 30°C and not higher than 95°C. Moreover, the water-soluble polymer that is contained in the presently disclosed slurry composition includes a sulfo group-containing monomer unit in a proportion of 3.0 mass% or more. Through the slurry composition containing both the particulate polymer and the water-soluble polymer that satisfy the specific attributes set forth above, it is possible to provide a functional layer having excellent blocking resistance, and it is also possible to provide a secondary battery in which high levels of both electrolyte solution injectability and high-temperature cycle characteristics can be realized.

### <Particulate polymer>

The particulate polymer has at least one glass-transition temperature of not lower than 30°C and not higher than 95°C. Note that the particulate polymer is preferably water-insoluble. When a polymer is said to be "water-insoluble" in the present specification, this means that when 0.5 g of the polymer is dissolved in 100 g of water at a temperature of 25°C, insoluble content is 90 mass% or more.

### «Glass-transition temperature»

The temperature range in which the particulate polymer has at least one glass-transition temperature is required to be not lower than 30°C and not higher than 95°C, is preferably 75°C or lower, and more preferably 68°C or lower, and is preferably 35°C or higher, and more preferably 45°C or higher. When the temperature range in which the particulate polymer has at least one glass-transition temperature is not lower than any of the lower limits set forth above, blocking resistance of an obtained functional layer can be increased, and internal resistance of an obtained secondary battery can be reduced. When the temperature range in which the particulate polymer has at least one glass-transition temperature is not higher than any of the upper limits set forth above, deformability of the particulate polymer during pressing or the like in production of a secondary battery increases, adhesiveness of a functional layer after immersion in electrolyte solution can be further improved, and cycle characteristics of an obtained secondary battery can be enhanced. Note that the glass-transition temperature of the particulate polymer can be adjusted by altering the types and proportions of monomers used to produce the particulate polymer, for example.

In a case in which the particulate polymer is a combination of a plurality of types of polymers such as a subsequently described polymer having a core-shell structure, the temperature at which a peak of large displacement is displayed is taken to be the glass-transition temperature of that polymer as described further below in the EXAMPLES section.

### «Core-shell structure»

The particulate polymer preferably has a core-shell structure. In the case of a particulate polymer having a core-shell structure, the particulate polymer has a core-shell structure that includes a core portion and a shell portion covering an outer surface of the core portion. By using a particulate polymer having a core-shell structure, it is possible to increase adhesiveness of a functional layer after immersion in electrolyte solution and also to even further enhance cycle characteristics of an obtained secondary battery. The shell portion may completely cover the outer surface of the core portion or may partially cover the outer surface of the core portion. In terms of external appearance, even in a situation in which the outer surface of the core portion appears to be completely covered by the shell portion, the shell portion is still considered to be a shell portion that partially covers the outer surface of the core portion so long as pores are formed that pass between inside and outside of the shell portion. Accordingly, a particulate polymer that includes a shell portion having fine pores that pass between an outer surface of the shell portion (i.e., a circumferential surface of the particulate polymer) and an outer surface of a core portion, for example, also corresponds to a particulate polymer in which a shell portion partially covers an outer surface of a core portion.

Note that the particulate polymer may include any constituent element other than the core portion and the shell portion described above so long as the expected effects are not significantly lost as a result. Specifically, the particulate polymer may, for example, include a portion inside of the core portion that is formed of a different polymer to the core portion. In one specific example, a residual seed particle may be present inside of the core portion in a situation in which seed particles are used in production of the particulate polymer by seeded polymerization. However, from a viewpoint of more noticeably displaying the expected effects, it is preferable that the particulate polymer is composed of only the core portion and the shell portion.

### «Volume-average particle diameter»

The volume-average particle diameter of the particulate polymer is preferably 0.25 µm or more, more preferably 0.30 µm or more, and even more preferably 0.40 µm or more, and is preferably 5.0 µm or less, more preferably 4.0 µm or less, even more preferably 3.0 µm or less, and particularly preferably 1.4 µm or less. When the volume-average particle diameter of the particulate polymer is not less than any of the lower limits set forth above, internal resistance of an obtained secondary battery can be reduced, presumably because it is easy to ensure that fine gaps are present in a functional layer. On the other hand, when the volume-average particle diameter of the particulate polymer is not more than any of the upper limits set forth above, adhesiveness of a functional layer after immersion in electrolyte solution can be further improved.

Note that the volume-average particle diameter of the particulate polymer can be adjusted by altering the types and proportions of monomers used to produce the particulate polymer and/or the polymerization conditions of the particulate polymer (for example, the used amount of emulsifier), for example.

### «Chemical composition»

No specific limitations are placed on the chemical composition of the particulate polymer so long as the particulate polymer has at least one glass-transition temperature of 95°C or lower. For example, the particulate polymer may be a homopolymer formed of repeating units of a single monomer or may be a copolymer that includes copolymerization units of a plurality of types of monomers. The homopolymer may be polyvinyl acetate, polyvinylidene fluoride, polymethyl methacrylate, or the like without any specific limitations. In particular, polyvinyl acetate is preferable in a case in which the particulate polymer is a homopolymer. Moreover, the copolymer may be a copolymer having a chemical composition illustrated by example below, for example. Furthermore, in a case in which the particulate polymer is the aforementioned polymer having a core-shell structure, the chemical composition of a polymer forming the core portion can be a chemical composition in accordance with the following description.

Although no specific limitations are placed on repeating units included in the particulate polymer, an aromatic monovinyl monomer unit and a cross-linkable monomer unit are preferable. Note that the particulate polymer may include just one type of monomer unit (repeating unit) or may include a plurality of types of monomer units (repeating units).

### -Aromatic monovinyl monomer unit-

Examples of aromatic monovinyl monomers that can form an aromatic monovinyl monomer unit of the particulate polymer include styrene, styrene sulfonic acid and salts thereof (for example, sodium styrenesulfonate), α-methylstyrene, vinyltoluene, and 4-(tert-butoxy)styrene. One of these aromatic monovinyl monomers may be used individually, or two or more of these aromatic monovinyl monomers may be used in combination. Of these aromatic monovinyl monomers, styrene is preferable.

The proportion constituted by aromatic monovinyl monomer units included in the particulate polymer when all repeating units are taken to be 100 mass% is preferably 20 mass% or more, more preferably 30 mass% or more, and more preferably 40 mass% or more, and is preferably 85 mass% or less, more preferably 75 mass% or less, and even more preferably 70 mass% or less. When the proportion constituted by aromatic monovinyl monomer units in the polymer of the core portion is not less than any of the lower limits set forth above, the glass-transition temperature of the polymer of the core portion increases, and blocking resistance of a battery member including a functional layer can be improved. On the other hand, when the proportion constituted by aromatic monovinyl monomer units in the polymer of the core portion is not more than any of the upper limits set forth above, adhesiveness of a functional layer after immersion in electrolyte solution can be further improved because deformability of the particulate polymer during pressing or the like in production of a secondary battery is sufficiently ensured.

### -Cross-linkable monomer unit-

Examples of cross-linkable monomers that can form a cross-linkable monomer unit of the particulate polymer include monomers that can form a cross-linked structure through polymerization without any specific limitations. Examples of cross-linkable monomers that can be used typically include monomers that are thermally cross-linkable. More specifically, a cross-linkable monomer that includes a thermally cross-linkable group and one olefinic double bond per molecule or a cross-linkable monomer that includes two or more olefinic double bonds per molecule may be used.

Examples of thermally cross-linkable groups include an epoxy group, an N-methylolamide group, an oxetanyl group, an oxazoline group, and combinations thereof. Of these thermally cross-linkable groups, an epoxy group is more preferable in terms of ease of cross-linking and cross-link density adjustment.

Examples of cross-linkable monomers that include an epoxy group as a thermally cross-linkable group and an olefinic double bond include unsaturated glycidyl ethers such as vinyl glycidyl ether, allyl glycidyl ether, butenyl glycidyl ether, and o-allylphenyl glycidyl ether; monoepoxides of dienes and polyenes such as butadiene monoepoxide, chloroprene monoepoxide, 4,5-epoxy-2-pentene, 3,4-epoxy-1-vinylcyclohexene, and 1,2-epoxy-5,9-cyclododecadiene; alkenyl epoxides such as 3,4-epoxy-1-butene, 1,2-epoxy-5-hexene, and 1,2-epoxy-9-decene; and glycidyl esters of unsaturated carboxylic acids such as glycidyl acrylate, glycidyl methacrylate, glycidyl crotonate, glycidyl 4-heptenoate, glycidyl sorbate, glycidyl linoleate, glycidyl 4-methyl-3-pentenoate, glycidyl ester of 3-cyclohexenecarboxylic acid, and glycidyl ester of 4-methyl-3-cyclohexenecarboxylic acid.

Examples of cross-linkable monomers that include an N-methylolamide group as a thermally cross-linkable group and an olefinic double bond include methylol group-containing (meth)acrylamides such as N-methylol (meth)acrylamide. Note that in the present specification, "(meth)acrylamide" indicates "acrylamide" and/or "methacrylamide".

Examples of cross-linkable monomers that include an oxetanyl group as a thermally cross-linkable group and an olefinic double bond include 3-((meth)acryloyloxymethyl)oxetane, 3-((meth)acryloyloxymethyl)-2-trifluoromethyloxetane, 3-((meth)acryloyloxymethyl)-2-phenyloxetane, 2-((meth)acryloyloxymethyl)oxetane, and 2-((meth)acryloyloxymethyl)-4-trifluoromethyloxetane. Note that in the present specification, "(meth)acryloyl" indicates "acryloyl" and/or "methacryloyl".

Examples of cross-linkable monomers that include an oxazoline group as a thermally cross-linkable group and an olefinic double bond include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline.

Examples of cross-linkable monomers that include two or more olefinic double bonds per molecule include allyl (meth)acrylate, ethylene glycol di(meth)acrylate, diethylene glycol di(meth)acrylate, triethylene glycol di(meth)acrylate, tetraethylene glycol di(meth)acrylate, trimethylolpropane tri(meth)acrylate, dipropylene glycol diallyl ether, polyglycol diallyl ether, triethylene glycol divinyl ether, hydroquinone diallyl ether, tetraallyloxyethane, trimethylolpropane diallyl ether, allyl or vinyl ethers of polyfunctional alcohols other than those previously mentioned, triallylamine, methylenebisacrylamide, and divinylbenzene.

Note that in the present specification, "(meth)acrylate" indicates "acrylate" and/or "methacrylate".

One cross-linkable monomer may be used individually, or a plurality of cross-linkable monomers may be used in combination. Of these cross-linkable monomers, cross-linkable monomers that include two or more olefinic double bonds per molecule are preferable, ethylene glycol dimethacrylate and allyl methacrylate are more preferable, and ethylene glycol dimethacrylate is even more preferable.

The proportion constituted by cross-linkable monomer units included in the particulate polymer when all repeating units are taken to be 100 mass% is preferably 0.05 mass% or more, and more preferably 0.1 mass% or more, and is preferably 15.0 mass% or less, more preferably 13.0 mass% or less, and even more preferably 5.0 mass% or less. When the proportion constituted by cross-linkable monomer units in the particulate polymer is within any of the ranges set forth above, adhesiveness of a functional layer after immersion in electrolyte solution and rate characteristics and cycle characteristics of a secondary battery can be improved.

### -Other monomer units-

Although no specific limitations are placed on monomer units (other monomer units) that the particulate polymer can include besides an aromatic monovinyl monomer unit and a cross-linkable monomer unit, examples thereof include an acidic group-containing monomer unit, a (meth)acrylic acid ester monomer unit, and a nitrile group-containing monomer unit.

### -Acidic group-containing monomer unit-

Examples of acidic group-containing monomers that can form an acidic group-containing monomer unit of the particulate polymer include carboxy group-containing monomers, sulfo group-containing monomers, and phosphate group-containing monomers. One of these acidic group-containing monomers may be used individually, or two or more of these acidic group-containing monomers may be used in combination. Note that an acid group of an acidic group-containing monomer unit may form a salt with an alkali metal, ammonia, or the like.

Examples of carboxy group-containing monomers include ethylenically unsaturated monocarboxylic acids, derivatives of ethylenically unsaturated monocarboxylic acids, ethylenically unsaturated dicarboxylic acids, acid anhydrides of ethylenically unsaturated dicarboxylic acids, and derivatives of these ethylenically unsaturated dicarboxylic acids and acid anhydrides.

Examples of ethylenically unsaturated monocarboxylic acids include acrylic acid, methacrylic acid, and crotonic acid. Examples of derivatives of ethylenically unsaturated monocarboxylic acids include 2-ethylacrylic acid, isocrotonic acid, α-acetoxyacrylic acid, β-trans-aryloxyacrylic acid, α-chloro-β-E-methoxyacrylic acid, and β-diaminoacrylic acid.

Examples of ethylenically unsaturated dicarboxylic acids include maleic acid, fumaric acid, itaconic acid, and mesaconic acid. Examples of acid anhydrides of ethylenically unsaturated dicarboxylic acids include maleic anhydride, acrylic anhydride, methylmaleic anhydride, and dimethylmaleic anhydride. Examples of derivatives of ethylenically unsaturated dicarboxylic acids include methylmaleic acid, dimethylmaleic acid, phenylmaleic acid, chloromaleic acid, dichloromaleic acid, fluoromaleic acid, diphenyl maleate, nonyl maleate, decyl maleate, dodecyl maleate, octadecyl maleate, and fluoroalkyl maleates.

Examples of sulfo group-containing monomers include vinyl sulfonic acid, methyl vinyl sulfonic acid, (meth)allyl sulfonic acid, (meth)acrylic acid 2-sulfoethyl, 2-acrylamido-2-methylpropane sulfonic acid, and 3-allyloxy-2-hydroxypropane sulfonic acid.

Note that in the present specification, "(meth)allyl" indicates "allyl" and/or "methallyl", and "(meth)acryl" indicates "acryl" and/or "methacryl".

Examples of phosphate group-containing monomers include 2-(meth)acryloyloxy ethyl phosphate, methyl-2-(meth)acryloyloxy ethyl phosphate, and ethyl-(meth)acryloyloxyethyl phosphate.

Of these examples, carboxy group-containing monomers are preferable, acrylic acid, methacrylic acid, and itaconic acid are more preferable, and methacrylic acid is even more preferable as an acidic group-containing monomer.

The proportion constituted by acidic group-containing monomer units that can optionally be included in the particulate polymer when all repeating units are taken to be 100 mass% may be 1.0 mass% or more, or may be 1.5 mass% or more, and is preferably 7.0 mass% or less, more preferably 6.0 mass% or less, and even more preferably 5.0 mass% or less. When the proportion constituted by acidic group-containing monomer units in the particulate polymer is not less than any of the lower limits set forth above, adhesiveness of an obtained functional layer in electrolyte solution can be increased. On the other hand, when the proportion constituted by acidic group-containing monomer units in the particulate polymer is not more than any of the upper limits set forth above, cycle characteristics of a secondary battery can be further improved.

### -(Meth)acrylic acid ester monomer unit-

Examples of (meth)acrylic acid ester monomers that can form a (meth)acrylic acid ester monomer unit of the particulate polymer include acrylic acid alkyl esters such as methyl acrylate, ethyl acrylate, n-propyl acrylate, isopropyl acrylate, n-butyl acrylate, t-butyl acrylate, isobutyl acrylate, n-pentyl acrylate, isopentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, isobutyl methacrylate, n-pentyl methacrylate, isopentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, stearyl methacrylate, and glycidyl methacrylate. One of these (meth)acrylic acid ester monomers may be used individually, or a plurality of these (meth)acrylic acid ester monomers may be used in combination. Of these (meth)acrylic acid ester monomers, 2-ethylhexyl acrylate, n-butyl acrylate, and ethyl acrylate are preferable, and 2-ethylhexyl acrylate is more preferable.

The proportion constituted by (meth)acrylic acid ester monomer units that are optionally included in the particulate polymer when all repeating units are taken to be 100 mass% is preferably 20 mass% or more, and is preferably 50 mass% or less, and more preferably 40 mass% or less. When the proportion constituted by (meth)acrylic acid ester monomer units in the particulate polymer is within any of the ranges set forth above, adhesiveness of a functional layer after immersion in electrolyte solution and rate characteristics and cycle characteristics of a secondary battery can be enhanced.

### -Nitrile group-containing monomer unit-

Examples of nitrile-group containing monomers that can form a nitrile group-containing monomer unit of the particulate polymer include α,β-ethylenically unsaturated nitrile monomers. Specifically, any α,β-ethylenically unsaturated compound that has a nitrile group can be used as an α,β-ethylenically unsaturated nitrile monomer without any specific limitations. Examples include acrylonitrile; α-halogenoacrylonitriles such as α-chloroacrylonitrile and α-bromoacrylonitrile; and α-alkylacrylonitriles such as methacrylonitrile and α-ethylacrylonitrile. One of these nitrile-group containing monomers may be used individually, or a plurality of these nitrile-group containing monomers may be used in combination. Of these nitrile-group containing monomers, acrylonitrile and methacrylonitrile are preferable, and acrylonitrile is more preferable.

The proportion constituted by nitrile group-containing monomer units that are optionally included in the particulate polymer when all repeating units are taken to be 100 mass% may be 1 mass% or more, or may be 5 mass% or more, and is preferably 20 mass% or less, and more preferably 15 mass% or less. When the proportion constituted by nitrile-group containing monomer units in the particulate polymer is within any of the ranges set forth above, adhesiveness of a functional layer after immersion in electrolyte solution and rate characteristics and cycle characteristics of a secondary battery can be enhanced.

As previously mentioned, in a case in which the particulate polymer is a core-shell polymer having a core-shell structure, a polymer forming the core portion is preferably as described above, and a polymer forming the shell portion is preferably as described below.

### [Shell portion]

In a case in which the particulate polymer is a core-shell polymer having a core-shell structure, no specific limitations are placed on repeating units included in a polymer that forms the shell portion, though an aromatic monovinyl monomer unit and an acidic group-containing monomer unit are preferable. Note that the polymer of the shell portion may include just one type of monomer unit (repeating unit) or may include a plurality of types of monomer units (repeating units).

### -Aromatic monovinyl monomer unit-

Examples of aromatic monovinyl monomers that can form an aromatic monovinyl monomer unit of the polymer of the shell portion include the same aromatic monovinyl monomers as previously described. One of these aromatic monovinyl monomers may be used individually, or a plurality of these aromatic monovinyl monomers may be used in combination. Of these aromatic monovinyl monomers, styrene is preferable.

The proportion constituted by aromatic monovinyl monomer units included in the polymer of the shell portion when all repeating units are taken to be 100 mass% is preferably 10 mass% or more, and more preferably 20 mass% or more. When the proportion constituted by aromatic monovinyl monomer units of the shell portion in the particulate polymer is 10 mass% or more, the glass-transition temperature of the polymer of the shell portion in the particulate polymer having a core-shell structure increases, and blocking resistance of a battery member including a functional layer can be improved. Note that the upper limit for the proportion constituted by aromatic monovinyl monomer units of the shell portion in the particulate polymer is preferably 40 mass% or less, and more preferably 30 mass% or less.

### -Acidic group-containing monomer unit-

Examples of acidic group-containing monomers that can form an acidic group-containing monomer unit of the polymer of the shell portion include the same acidic group-containing monomers as previously described in the "Core portion" section. One of these acidic group-containing monomers may be used individually, or a plurality of these acidic group-containing monomers may be used in combination. Of these acidic group-containing monomers, carboxy group-containing monomers are preferable, acrylic acid, methacrylic acid, and itaconic acid are more preferable, and methacrylic acid is even more preferable.

The proportion constituted by acidic group-containing monomer units included in the polymer of the shell portion when all repeating units included in the particulate polymer (i.e., the total of the polymer of the core portion and the polymer of the shell portion) are taken to be 100 mass% is preferably 0.01 mass% or more, and more preferably 0.1 mass% or more, and is preferably 1.0 mass% or less, and more preferably 0.6 mass% or less. When the proportion constituted by acidic group-containing monomer units of the shell portion in the particulate polymer is not less than any of the lower limits set forth above, adhesiveness of a functional layer in electrolyte solution can be increased. On the other hand, when the proportion constituted by acidic group-containing monomer units of the shell portion in the particulate polymer is not more than any of the upper limits set forth above, cycle characteristics of a secondary battery can be even further improved.

### -Other monomer units-

No specific limitations are placed on monomer units (other monomer units) that the polymer forming the shell portion can include besides an aromatic monovinyl monomer unit and an acidic group-containing monomer unit, and examples thereof include a cross-linkable monomer unit, a (meth)acrylic acid ester monomer unit, and a nitrile group-containing monomer unit such as previously described. Of these other monomer units, it is preferable that the polymer of the shell portion includes a nitrile group-containing monomer unit.

Examples of nitrile group-containing monomers that can form a nitrile group-containing monomer unit of the polymer of the shell portion include the same nitrile group-containing monomers as previously described. One of these nitrile-group containing monomers may be used individually, or a plurality of these nitrile-group containing monomers may be used in combination. Of these nitrile group-containing monomers, acrylonitrile and methacrylonitrile are preferable, and acrylonitrile is more preferable.

The proportion constituted by nitrile group-containing monomer units included in the polymer of the shell portion when all repeating units included in the particulate polymer (i.e., the total of the polymer of the core portion and the polymer of the shell portion) are taken to be 100 mass% is preferably 0.5 mass% or more, and more preferably 1.0 mass% or more, and is preferably 10.0 mass% or less, and more preferably 5.0 mass% or less. When the proportion constituted by nitrile-group containing monomer units of the shell portion in the particulate polymer is within any of the ranges set forth above, adhesiveness of a functional layer after immersion in electrolyte solution and rate characteristics and cycle characteristics of a secondary battery can be further improved.

### <<Production method>>

No specific limitations are placed on the method by which the particulate polymer is produced. The particulate polymer can be produced by a method that is in accordance with an established method such as emulsion polymerization. For example, in a case in which the particulate polymer is a core-shell polymer having a core-shell structure, the particulate polymer can be produced by stepwise polymerization in which the ratio of monomers for the polymer of the core portion and monomers for the polymer of the shell portion is changed over time, for example. Specifically, the particulate polymer having a core-shell structure can be produced by continuous multistage emulsion polymerization or multistage suspension polymerization in which a polymer of a preceding stage is sequentially covered by a polymer of a subsequent stage (for example, refer to WO2020/175025A1).

### <Water-soluble polymer>

The presently disclosed slurry composition contains a water-soluble polymer that includes a sulfo group-containing monomer unit in a proportion of 3 mass% or more. The water-soluble polymer is a component that can function as a binder in a heat-resistant layer formed using the slurry composition, that can impart binding capacity to a functional layer formed using the slurry composition, and that can hold components other than the water-soluble polymer, such as heat-resistant particles, that are contained in the functional layer so that the components are not shed from the functional layer.

So long as the water-soluble polymer includes a sulfo group-containing monomer unit in a proportion of 3 mass% or more, the water-soluble polymer may optionally include repeating units other than a sulfo group-containing monomer unit (hereinafter, referred to as "other repeating units") without any specific limitations. No specific limitations are placed on other repeating units, and examples thereof include an acidic group-containing monomer unit and a nitrile group-containing monomer unit.

### «Sulfo group-containing monomer unit»

Examples of sulfo group-containing monomers that can form a sulfo group-containing monomer unit include vinyl sulfonic acid, methyl vinyl sulfonic acid, (meth)allyl sulfonic acid, styrene sulfonic acid, (meth)acrylic acid 2-sulfoethyl, anethole sulfonic acid, acrylamido-alkane sulfonic acid, sulfoalkyl (meth)acrylate, and salts thereof. The alkane in the acrylamido-alkane sulfonic acid has a carbon number of 1 or more, and preferably has a carbon number of 20 or less, more preferably 10 or less, and even more preferably 6 or less. Moreover, the alkyl in the sulfoalkyl (meth)acrylate has a carbon number of 1 or more, and preferably has a carbon number of 20 or less, more preferably 10 or less, and even more preferably 6 or less. A salt of any of the monomers listed above is a salt that is formed by the sulfo group and an appropriate ion. The ion may be an alkali metal ion, for example, and in this case, the salt is an alkali metal sulfonate salt. Specifically, the acrylamido-alkane sulfonic acid may be 2-acrylamido-2-methylpropane sulfonic acid, for example, and the sulfoalkyl (meth)acrylate may be 2-sulfoethyl (meth)acrylate, 3-sulfopropyl (meth)acrylate, or the like, for example.

The proportional content of sulfo group-containing monomer units in the water-soluble polymer when all repeating units included in the water-soluble polymer are taken to be 100 mass% is required to be 3 mass% or more, is preferably 10 mass% or more, and is preferably 22 mass% or less, and more preferably 16 mass% or less. When the proportional content of sulfo group-containing monomer units in the water-soluble polymer is not less than any of the lower limits set forth above, adhesiveness of an obtained adhesive layer in electrolyte solution can be increased, and cycle characteristics of an obtained secondary battery can be enhanced. Moreover, when the proportional content of sulfo group-containing monomer units in the water-soluble polymer is not more than any of the upper limits set forth above, dispersion stability of the slurry composition can be increased, and internal resistance of an obtained secondary battery can be reduced.

### <<Acidic group-containing monomer unit>>

Examples of acidic group-containing monomers that can form an acidic group-containing monomer unit include monomers having an acidic group other than a sulfo group as an acidic group. Any of the carboxy group-containing monomers and phosphate group-containing monomers that were previously described in the "Particulate polymer" section, for example, can be used as such monomers.

One acidic group-containing monomer may be used individually, or two or more acidic group-containing monomers may be used in combination in a freely selected ratio. Moreover, carboxy group-containing monomers are preferable, monocarboxylic acids are more preferable, and acrylic acid is even more preferable as an acidic group-containing monomer that can form an acidic group-containing monomer unit.

The proportional content of acidic group-containing monomer units in the water-soluble polymer used in the presently disclosed slurry composition when the amount of all repeating units in the water-soluble polymer is taken to be 100 mass% is preferably 5 mass% or more, more preferably 15 mass% or more, and even more preferably 25 mass% or more, and is preferably 70 mass% or less, more preferably 60 mass% or less, and even more preferably 42 mass% or less. When the proportional content of acidic group-containing monomer units in the water-soluble polymer is not less than any of the lower limits set forth above, adhesiveness of an obtained functional layer in electrolyte solution can be increased. On the other hand, when the proportional content of acidic group-containing monomer units in the water-soluble polymer is not more than any of the upper limits set forth above, cycle characteristics of an obtained secondary battery can be further improved.

### «Nitrile group-containing monomer unit»

Examples of nitrile group-containing monomers that can form a nitrile group-containing monomer unit include α,β-ethylenically unsaturated nitrile monomers. Specifically, any α,β-ethylenically unsaturated compound that has a nitrile group can be used as an α,β-ethylenically unsaturated nitrile monomer without any specific limitations. Examples include acrylonitrile; α-halogenoacrylonitriles such as α-chloroacrylonitrile and α-bromoacrylonitrile; and α-alkylacrylonitriles such as methacrylonitrile and α-ethylacrylonitrile. Note that in the case of a nitrile group-containing monomer that also includes a sulfo group, that monomer is considered to be a "sulfo group-containing monomer" so long as it is used in order to form a monomer unit included in the water-soluble polymer.

One of the above-described nitrile group-containing monomers may be used individually, or two or more of the above-described nitrile group-containing monomers may be used in combination in a freely selected ratio. Moreover, acrylonitrile is preferable as a nitrile group-containing monomer that can form a nitrile group-containing monomer unit from a viewpoint of increasing adhesiveness of an obtained functional layer in electrolyte solution.

The proportional content of nitrile group-containing monomer units in the water-soluble polymer used in the presently disclosed slurry composition when the amount of all repeating units in the water-soluble polymer is taken to be 100 mass% is preferably 10 mass% or more, more preferably 20 mass% or more, and even more preferably 30 mass% or more, and is preferably 70 mass% or less, and more preferably 60 mass% or less. When the proportional content of nitrile group-containing monomer units in the water-soluble polymer is not less than any of the lower limits set forth above, adhesiveness of an obtained functional layer in electrolyte solution can be increased. On the other hand, when the proportional content of nitrile group-containing monomer units in the water-soluble polymer is not more than any of the upper limits set forth above, adhesiveness of an obtained functional layer in electrolyte solution can be increased.

### <<Other repeating units>>

No specific limitations are placed on other repeating units that are included in the water-soluble polymer. Examples of other repeating units include monomer units derived from known monomers such as a (meth)acrylic acid ester monomer unit and a cross-linkable monomer unit previously described in the "Particulate polymer" section. In a case in which a monomer unit corresponding to any of these monomer units also includes a sulfo group, that monomer unit is considered to be a "sulfo group-containing monomer unit" so long as it is a constituent element of the water-soluble polymer. Note that the water-soluble polymer may include one type of other repeating unit or may include two or more types of other repeating units in a freely selected ratio.

Moreover, the proportional content of other repeating units when all repeating units (all monomer units) included in the water-soluble polymer are taken to be 100 mass% is preferably 10 mass% or less, more preferably 5 mass% or less, even more preferably 1 mass% or less, and particularly preferably 0 mass%.

### [Weight-average molecular weight]

The weight-average molecular weight of the water-soluble polymer used in the presently disclosed slurry composition is preferably 50,000 or more, more preferably 150,000 or more, and even more preferably 200,000 or more, and is preferably 1,000,000 or less, more preferably 600,000 or less, and even more preferably 550,000 or less. When the weight-average molecular weight of the water-soluble polymer is not less than any of the lower limits set forth above, adhesiveness of a functional layer in electrolyte solution can be increased due to improved rigidity of the water-soluble polymer. On the other hand, when the weight-average molecular weight of the water-soluble polymer is 1,000,000 or less, dispersibility of the slurry composition can be increased, the resistance of an obtained functional layer can be reduced, and rate characteristics of an obtained secondary battery can be enhanced.

Note that the weight-average molecular weight of the water-soluble polymer can be adjusted by altering the type or amount of a polymerization initiator and/or polymerization accelerator that is used in production of the water-soluble polymer, for example.

### <<Production method of water-soluble polymer>>

The water-soluble polymer described above can be produced, for example, by any of solution polymerization, suspension polymerization, bulk polymerization, emulsion polymerization, or the like without any specific limitations. Moreover, the polymerization method may be addition polymerization such as ionic polymerization, radical polymerization, or living radical polymerization. The polymerization may be carried out with a commonly used polymerization initiator, polymerization accelerator, emulsifier, dispersant, chain transfer agent, or the like, and the amount thereof may also be the same as commonly used. In particular, aqueous solution polymerization in which water is used as a polymerization solvent is preferable because it does not require a solvent removal operation, has high solvent safety, and does not suffer from a problem of inclusion of a surfactant.

No specific limitations are placed on polymerization initiators that can be used in production of the water-soluble polymer. For example, a known polymerization initiator such as sodium persulfate, ammonium persulfate, or potassium persulfate may be used. Of these polymerization initiators, ammonium persulfate is preferable. One polymerization initiator may be used individually, or two or more polymerization initiators may be used in combination in a freely selected ratio.

Moreover, no specific limitations are placed on the polymerization accelerator, and a known reductive polymerization accelerator such as L-ascorbic acid, sodium hydrogen sulfite, or tetramethylethylenediamine can be used. Of these polymerization accelerators, L-ascorbic acid is preferable. One polymerization accelerator may be used individually, or two or more polymerization accelerators may be used in combination in a freely selected ratio.

### <<Content>>

The content of the specific water-soluble polymer described above in the slurry composition is preferably 0.1 parts by mass or more, and more preferably 0.5 parts by mass or more per 100 parts by mass of the particulate polymer, and is preferably 20 parts by mass or less, and more preferably 10 parts by mass or less per 100 parts by mass of the particulate polymer. When the amount of the water-soluble polymer is within any of the ranges set forth above, adhesiveness of an obtained functional layer can be increased, and blocking resistance of an obtained functional layer can be even further increased.

### <Binder for functional layer>

In addition to the particulate polymer and water-soluble polymer described above, the presently disclosed slurry composition preferably further contains a binder for a functional layer that is a different polymer from these polymers. Any polymer can be used as the binder for a functional layer without any specific limitations so long as it can display adhesive capability for holding components such as the particulate polymer in a functional layer and/or adhesive capability between the functional layer and an adherend. In particular, a polymer having a glass-transition temperature of lower than 20°C is preferable as the binder for a functional layer. Note that the binder for a functional layer is preferably water-insoluble.

### «Glass-transition temperature»

The glass-transition temperature of the binder for a functional layer is preferably lower than 20°C, preferably lower than 15°C, and more preferably 12°C or lower, and is preferably -40°C or higher, more preferably -20°C or higher, and even more preferably -10°C or higher. By using a slurry composition that in addition to the previously described particulate polymer, also contains a binder for a functional layer having a glass-transition temperature that is lower than any of the upper limits set forth above, it is possible to improve adhesiveness of a functional layer after immersion in electrolyte solution while also even further enhancing rate characteristics of a secondary battery. On the other hand, when the glass-transition temperature of the binder for a functional layer is not lower than any of the lower limits set forth above, blocking resistance of an obtained functional layer can be improved.

Note that the glass-transition temperature of the binder for a functional layer can be adjusted by altering the types and proportions of monomers used to produce the binder for a functional layer, for example.

### «Chemical composition»

No specific limitations are placed on the chemical composition of the binder for a functional layer. For example, the binder for a functional layer may be an aromatic vinyl polymer in which the proportional content of aromatic monovinyl monomer units is 50 mass% or more of all repeating units or may be an acrylic polymer in which the proportional content of (meth)acrylic acid ester monomer units is 50 mass% or more of all repeating units. Examples of other monomer units besides an aromatic monovinyl monomer unit that can be included in the aromatic vinyl polymer include, but are not specifically limited to, an aliphatic conjugated diene monomer unit derived from 1,3-butadiene or the like, a hydroxy group-containing monomer unit derived from 2-hydroxyethyl acrylate or the like, and an acidic group-containing monomer unit derived from itaconic acid or the like. Moreover, examples of other monomer units besides a (meth)acrylic acid ester monomer unit that can be included in the acrylic polymer include, but are not specifically limited to, an acidic group-containing monomer unit derived from (meth)acrylic acid or the like and a nitrile group-containing monomer unit derived from acrylonitrile or the like.

The method of polymerization of the binder for a functional layer may be in accordance with an established method without any specific limitations. Moreover, a commercially available binder can, of course, be used as the binder for a functional layer.

### <<Amount>>

The amount of the binder for a functional layer that is compounded in the presently disclosed slurry composition is not specifically limited but is preferably 1 part by mass or more, and more preferably 2 parts by mass or more per 100 parts by mass of the particulate polymer, and is preferably 50 parts by mass or less, and more preferably 40 parts by mass or less per 100 parts by mass of the particulate polymer. Adhesiveness of a functional layer after immersion in electrolyte solution can be further improved when the amount of the binder for a functional layer is not less than any of the lower limits set forth above per 100 parts by mass of the particulate polymer, whereas blocking resistance of a battery member including a functional layer can be ensured when the amount of the binder for a functional layer is not more than any of the upper limits set forth above per 100 parts by mass of the particulate polymer.

### <Solvent>

A known solvent that can be used as a dispersion medium of at least the previously described particulate polymer can be used as a solvent that is contained in the presently disclosed slurry composition. Of such solvents, water is preferable as the solvent. Note that at least a portion of the solvent of the slurry composition can be a polymerization solvent that was used in production of the particulate polymer and/or the water-soluble polymer, but is not specifically limited thereto.

### <Other components>

The presently disclosed slurry composition may contain any other components besides the components described above. Commonly known components can be used as these other components without any specific limitations so long as they do not affect battery reactions. One of such other components may be used individually, or two or more of such other components may be used in combination.

Examples of other components include heat-resistant particles, wetting agents (polyethylene oxide, polypropylene oxide, etc.), and other water-soluble polymers (carboxymethyl cellulose, salts of carboxymethyl cellulose, polyvinyl alcohol, etc.) differing from the previously described water-soluble polymer.

Any known heat-resistant particles that are used in non-aqueous secondary batteries can be used without any specific limitations as heat-resistant particles that are compounded in the slurry composition.

Specifically, although both inorganic fine particles and organic fine particles other than the particulate polymer and binder for a functional layer described above can be used as the heat-resistant particles, inorganic fine particles are normally used. The material of the heat-resistant particles is preferably an electrochemically stable material that is present stably in the environment of use of a non-aqueous secondary battery. Examples of materials of the heat-resistant particles that are preferable from such a viewpoint include particles of oxides such as aluminum oxide (alumina), hydrous aluminum oxide (boehmite), silicon oxide, magnesium oxide (magnesia), calcium oxide, titanium oxide (titania), BaTiO₃, ZrO, and alumina-silica complex oxide; particles of nitrides such as aluminum nitride and boron nitride; particles of covalently bonded crystals such as silicon and diamond; particles of sparingly soluble ionic crystals such as barium sulfate, calcium fluoride, and barium fluoride; and fine particles of clay such as talc and montmorillonite. These particles may be subjected to element substitution, surface treatment, solid solution treatment, and/or the like as necessary.

In a case in which organic fine particles are used as the heat-resistant particles, the glass-transition temperature and/or melting point of the organic fine particles is normally higher than 150°C, preferably 180°C or higher, and more preferably 200°C or higher.

Note that one of the types of heat-resistant particles described above may be used individually, or two or more of the types of heat-resistant particles described above may be used in combination.

The amount of the heat-resistant particles in the slurry composition is not specifically limited but is preferably not less than 200 parts by mass and not more than 1,500 parts by mass per 100 parts by mass of the particulate polymer.

### <<Production method>>

No specific limitations are placed on the method by which the slurry composition is produced. For example, the slurry composition can be produced by mixing the particulate polymer, the water-soluble polymer, and the solvent with the binder for a functional layer and/or other components that are used as necessary. Although no specific limitations are placed on the mixing method, the mixing is normally carried out using a disperser as a mixing device in order to efficiently disperse the components.

The disperser is preferably a device that can uniformly disperse and mix the above-described components. Examples of such devices include a ball mill, a sand mill, a pigment disperser, a grinding machine, an ultrasonic disperser, a homogenizer, and a planetary mixer. A high-level dispersing device such as a bead mill, a roll mill, or a FILMIX may be used from a viewpoint of being capable of imparting a high level of dispersing shear.

### (Functional layer)

The presently disclosed slurry composition for a non-aqueous secondary battery functional layer set forth above can be used to form a functional layer on a suitable substrate. Specifically, a functional layer can be formed by drying the slurry composition on a suitable substrate. In other words, the functional layer is formed of a dried product of the slurry composition set forth above, normally contains the previously described particulate polymer and water-soluble polymer, and optionally contains the previously described binder for a functional layer and/or other components. Note that in a case in which the previously described particulate polymer, water-soluble polymer, and/or binder for a functional layer includes a cross-linkable monomer unit, the particulate polymer, water-soluble polymer, and/or binder for a functional layer may be cross-linked during drying of the slurry composition or during heat treatment that is optionally performed after drying (i.e., the functional layer may contain a cross-linked product of the previously described particulate polymer, water-soluble polymer, and/or binder for a functional layer). Note that the preferred ratio of components contained in the functional layer is the same as the preferred ratio of the components in the presently disclosed slurry composition for a non-aqueous secondary battery functional layer.

The functional layer that is formed using the presently disclosed slurry composition has excellent blocking resistance and also has excellent electrolyte solution injectability and adhesive capability. Consequently, a secondary battery having excellent electrolyte solution injectability and cycle characteristics can be produced by using a battery member that includes this functional layer.

### <Substrate>

No specific limitations are placed on the substrate onto which the slurry composition is applied and on which the functional layer is formed. For example, a separator substrate can be used as the substrate in a case in which the functional layer is used as a member that constitutes part of a separator, whereas an electrode substrate having an electrode mixed material layer formed on a current collector can be used as the substrate in a case in which the functional layer is used as a member constituting part of an electrode. No specific limitations are placed on the use of the functional layer formed on the substrate. For example, the functional layer may be formed on a separator substrate or the like and then used in this form as a battery member such as a separator. Alternatively, the functional layer may be formed on an electrode substrate and then used as an electrode. Further alternatively, the functional layer may be formed on a releasable substrate, peeled from the substrate, and then pasted onto another substrate to be used as a battery member.

However, it is preferable that a separator substrate or an electrode substrate is used as the substrate from a viewpoint of omitting a step of peeling a releasable substrate from the functional layer and raising battery member production efficiency.

### <<Separator substrate>>

The separator substrate is not specifically limited and can be any of those described in JP2012-204303A, for example. Of these separator substrates, a microporous membrane made of polyolefinic (polyethylene, polypropylene, polybutene, or polyvinyl chloride) resin is preferred because such a membrane can reduce the total thickness of the separator, which increases the ratio of electrode active material in the secondary battery, and consequently increases the volumetric capacity.

Note that the separator substrate may include any layer that can display an expected function (other than the functional layer formed from the presently disclosed slurry composition) in part thereof. For example, the separator substrate may include a porous membrane layer that contains heat-resistant particles and a binder but does not contain either or both of the previously described particulate polymer and water-soluble polymer in part thereof, and, more specifically, may include a porous membrane layer containing heat-resistant particles and a binder at one side or both sides of a microporous membrane formed of polyolefinic resin such as previously described. Note that the "heat-resistant particles" in the porous membrane layer can, for example, be any of those previously given as examples in the "Slurry composition for non-aqueous secondary battery functional layer" section. Moreover, the "binder" in the porous membrane layer can, for example, be any of those given as examples of the "binder for a functional layer" in the "Slurry composition for non-aqueous secondary battery functional layer" section or can be any known binder.

### «Electrode substrate»

The electrode substrate (positive/negative electrode substrate) is not specifically limited and may, for example, be an electrode substrate obtained by forming an electrode mixed material layer on a current collector.

The current collector, components in the electrode mixed material layer (for example, an electrode active material (positive/negative electrode active material) and a binder for an electrode mixed material layer (binder for a positive/negative electrode mixed material layer)), and the method by which the electrode mixed material layer is formed on the current collector can be known examples thereof such as any of those described in JP2013-145763A, for example.

Note that the electrode substrate may include any layer having an expected function (other than the functional layer formed from the presently disclosed slurry composition) in part thereof (for example, the electrode substrate may include a porous membrane layer containing heat-resistant particles and a binder such as previously described in the "Separator substrate" section).

### «Releasable substrate»

A known releasable substrate can be used as the releasable substrate without any specific limitations.

### <Formation method of functional layer>

Examples of methods by which the functional layer may be formed on a substrate such as the separator substrate or the electrode substrate described above include:
(1) a method in which the slurry composition is applied onto the surface of the separator substrate or the electrode substrate (surface at the electrode mixed material layer-side in the case of the electrode substrate; same applies below) and is then dried;
(2) a method in which the separator substrate or the electrode substrate is immersed in the slurry composition and is then dried; and
(3) a method in which the slurry composition is applied onto a releasable substrate and is dried to produce a functional layer that is then transferred onto the surface of the separator substrate or the electrode substrate.

Of these methods, method (1) is particularly preferable since it allows simple control of the thickness of the functional layer. In more detail, method (1) includes a step (application step) of applying the slurry composition onto the separator substrate or the electrode substrate and a step (drying step) of drying the composition for a functional layer that has been applied onto the separator substrate or the electrode substrate to form a functional layer.

No specific limitations are placed on the method by which the slurry composition is applied onto the separator substrate or the electrode substrate in the application step. For example, a method such as spray coating, doctor blading, reverse roll coating, direct roll coating, gravure coating, extrusion coating, or brush coating may be used.

The slurry composition on the substrate can be dried by any commonly known method without any specific limitations in the drying step. Examples of drying methods that may be used include drying by warm, hot, or low-humidity air, drying in a vacuum, and drying through irradiation with infrared light, electron beams, or the like. Although no specific limitations are placed on the drying conditions, the drying temperature is preferably 30°C to 80°C and the drying time is preferably 30 seconds to 10 minutes.

The thickness of the functional layer that is formed on the substrate is preferably 0.1 µm or more, more preferably 0.3 µm or more, and even more preferably 0.5 µm or more, and is preferably 3.0 µm or less, more preferably 1.5 µm or less, and even more preferably 1.0 µm or less.

The shape of the functional layer that is formed on the substrate is not specifically limited, and the functional layer can be formed with any plan view shape such as a striped, dotted, or lattice shape. In particular, an adhesive layer may be formed with a dotted shape from a viewpoint of reducing secondary battery resistance. A dotted functional layer can be obtained by using a coating machine to implement an inkjet method, for example.

The diameter of dots of the functional layer that are arranged in a dotted pattern is preferably 10 µm or more, and more preferably 20 µm or more, and is preferably 300 µm or less, and more preferably 200 µm or less. When the diameter of dots of the functional layer is not less than any of the lower limits set forth above, adhesive strength between an electrode and a separator can be increased. On the other hand, when the diameter of dots of the functional layer is not more than any of the upper limits set forth above, deterioration of output characteristics of a secondary battery can be inhibited.

The thickness of dots of the functional layer that are arranged in a dotted pattern is preferably 5 µm or more. When the thickness of dots of the functional layer is not less than the lower limit set forth above, adhesive strength between an electrode and a separator can be increased.

### (Separator for non-aqueous secondary battery)

The presently disclosed separator includes a separator substrate and a functional layer formed from the presently disclosed slurry composition on at least one surface of the separator substrate. The separator substrate and the functional layer that are constituents of the separator are each the same as those previously described in the "Functional layer" section.

Moreover, as a result of the presently disclosed separator including a functional layer formed using the presently disclosed slurry composition, the presently disclosed separator has excellent blocking resistance in a state prior to immersion in electrolyte solution and can adhere well to another adjacent battery member (for example, an electrode) via the functional layer after immersion in electrolyte solution. In addition, the presently disclosed separator can increase electrolyte solution injectability of a secondary battery and can cause a secondary battery to display excellent cycle characteristics.

### (Non-aqueous secondary battery)

The presently disclosed non-aqueous secondary battery includes the presently disclosed separator for a non-aqueous secondary battery set forth above. More specifically, the presently disclosed non-aqueous secondary battery includes a positive electrode, a negative electrode, a separator, and an electrolyte solution, wherein the separator is the presently disclosed separator for a non-aqueous secondary battery that includes a separator substrate and a functional layer.

The presently disclosed non-aqueous secondary battery has excellent electrolyte solution injectability and cycle characteristics as a result of including the presently disclosed separator for a non-aqueous secondary battery.

### <Positive electrode and negative electrode>

In the presently disclosed secondary battery, at least the separator includes a functional layer, and the positive electrode and the negative electrode may also each include a functional layer. An electrode produced by forming an electrode mixed material layer on a current collector to form an electrode substrate and then providing a functional layer on the electrode substrate may be used as a positive electrode or negative electrode that includes a functional layer. Note that the electrode substrate and the separator substrate can be the same as those that were previously described in the "Functional layer" section.

Moreover, an electrode formed of an electrode substrate such as previously described can be used without any specific limitations as a positive electrode or negative electrode that does not include a functional layer.

### <Electrolyte solution>

The electrolyte solution is normally an organic electrolyte solution obtained by dissolving a supporting electrolyte in an organic solvent. The supporting electrolyte may, for example, be a lithium salt in the case of a lithium ion secondary battery. Examples of lithium salts that may be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable as they readily dissolve in solvents and exhibit a high degree of dissociation. One electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), and methyl ethyl carbonate (MEC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having a high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution may be adjusted as appropriate. Furthermore, known additives may be added to the electrolyte solution.

### <Production method of non-aqueous secondary battery>

The secondary battery can be produced by, for example, stacking the positive electrode and the negative electrode with the presently disclosed separator for a non-aqueous secondary battery in-between, performing rolling, folding, or the like of the resultant laminate, as necessary, to place the laminate in a battery container, injecting the electrolyte solution into the battery container, and sealing the battery container. In order to prevent pressure increase inside the battery and occurrence of overcharging or overdischarging, an expanded metal; an overcurrent preventing device such as a fuse or a PTC device; or a lead plate may be provided in the battery container as necessary. The shape of the battery may, for example, be a coin type, a button type, a sheet type, a cylinder type, a prismatic type, or a flat type.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

Measurements and evaluations of various attributes in the examples and comparative examples were performed according to the following methods.

### <Glass-transition temperature>

A water dispersion of a polymer (particulate polymer or binder for functional layer) serving as a measurement subject was dried at a temperature of 25°C for 48 hours to obtain a powdered measurement sample.

The measurement sample was weighed into an aluminum pan in an amount of 10 mg and was measured by a differential scanning calorimeter (produced by SII NanoTechnology Inc.; product name: EXSTAR DSC6220) under conditions stipulated in JIS Z8703 in a measurement temperature range of -100°C to 200°C with a heating rate of 20°C/min to obtain a differential scanning calorimetry (DSC) curve. Note that an empty aluminum pan was used as a reference. The temperature at which a derivative signal (DDSC) displayed a peak in this heating process was determined as the glass-transition temperature (°C). Note that in a situation in which a plurality of peaks were measured, the temperature at which a peak of largest displacement was displayed was taken to be the glass-transition temperature of the polymer.

### <Volume-average particle diameter>

The volume-average particle diameter of a polymer was measured by laser diffraction. Specifically, a water dispersion of the polymer that was adjusted to a solid content concentration of 0.1 mass% was used as a sample. Moreover, in a particle diameter distribution (by volume) measured using a laser diffraction particle size analyzer (produced by Beckman Coulter, Inc.; product name: LS-13 320), the particle diameter D50 at which cumulative volume calculated from a small diameter end of the distribution reached 50% was taken to be the volume-average particle diameter.

### <Weight-average molecular weight>

An aqueous solution containing a water-soluble polymer produced in each example or comparative example was diluted to adjust the concentration thereof to 0.5%. Next, the aqueous solution was adjusted to pH 10 to 12 through addition of caustic soda, was immersed in a hot water bath of 80°C or higher for 1 hour, and was subsequently diluted to 0.025% with an eluent indicated below to prepare a sample. The sample was analyzed by gel permeation chromatography under the following conditions to determine the weight-average molecular weight of the water-soluble polymer.
Apparatus: Gel permeation chromatograph GPC (instrument No. GPC-26)
Detector: Differential refractive index detector RI (produced by Showa Denko K.K.; product name: RI-201; sensitivity: 32)
Column: TSKgel GMPWXL × 2 columns (Ø7.8 mm × 30 cm; produced by Tosoh Corporation)
Solvent: 0.1 M Tris buffer solution (pH 9; 0.1 M potassium chloride added)
Flow rate: 0.7 mL/min
Column temperature: 40°C
Injection volume: 0.2 mL
Standard sample: Monodisperse polyethylene oxide (PEO) and polyethylene glycol (PEG) produced by Tosoh Corporation and Sigma-Aldrich

### <Adhesiveness after immersion in electrolyte solution>

A single-layer polyethylene separator (thickness: 12 µm) produced by a wet method was prepared as a separator substrate. A slurry composition produced in each example or comparative example was applied onto one surface of this separator substrate, and the slurry composition on the separator substrate was dried at 50°C for 10 minutes to form a functional layer (coating area density: 0.2 g/m²). The separator including this functional layer at one side was used as a separator for evaluation.

In addition, a negative electrode was produced in the same way as in Example 1 described further below and was taken to be a negative electrode for evaluation.

The negative electrode for evaluation and separator for evaluation that were obtained as described above were each cut out as a rectangular shape of 10 mm × 100 mm. The negative electrode mixed material layer of the negative electrode was arranged along the surface of the functional layer of the separator to obtain a test specimen, and this test specimen was placed inside laminate packing together with approximately 400 µL of electrolyte solution (solvent: ethylene carbonate (EC)/diethyl carbonate (DEC)/vinylene carbonate (VC) (volume ratio) = 68.5/30/1.5; electrolyte: LiPF₆ of 1 M in concentration). Once 12 hours had passed, the test specimen, together with the laminate packing, was pressed at 80°C with a pressure of 1.0 MPa for 10 minutes.

The test specimen was then taken out, and electrolyte solution on the surface of the test specimen was wiped off. Next, the test specimen was placed with the surface at the current collector-side of the negative electrode facing downward, and cellophane tape was affixed to the surface at the current collector-side of the negative electrode. Tape prescribed by JIS Z1522 was used as the cellophane tape. The cellophane tape was fixed to a horizontal test stage in advance. The stress when the separator was peeled off by pulling one end of the separator vertically upward at a pulling speed of 50 mm/min was measured. Three measurements were made in this manner. An average value of the stress was determined as the peel strength and was evaluated by the following standard. A larger peel strength indicates that the functional layer has better adhesiveness after immersion in electrolyte solution and that a separator and an electrode (negative electrode) can be strongly adhered via the functional layer in electrolyte solution.
A: Peel strength of 6.0 N/m or more
B: Peel strength of not less than 2.0 N/m and less than 6.0 N/m
C: Peel strength of not less than 0.5 N/m and less than 2.0 N/m
D: Peel strength of less than 0.5 N/m

### <Electrolyte solution injectability>

Electrolyte solution (solvent: ethylene carbonate (EC)/diethyl carbonate (DEC)/vinylene carbonate (VC) (volume ratio) = 68.5/30/1.5; electrolyte: LiPF₆ of 1 M in concentration) was injected into a lithium ion secondary battery produced in each example or comparative example. The inside of the lithium ion secondary battery was depressurized to -100 kPa, and this state was maintained for 1 minute. Thereafter, heat sealing was performed. After 10 minutes, an electrode (positive electrode) was dismantled, and the impregnation state of electrolyte solution in the electrode was visually checked. An evaluation was made by the following standard. Impregnation of a larger portion of the electrode with the electrolyte solution indicates higher electrolyte solution injectability.
A: Entire surface of electrode impregnated with electrolyte solution
B: Portion of less than 1 cm² remains unimpregnated with electrolyte solution in electrode (excluding case in which entire surface is impregnated)
C: Portion of not less than 1 cm² and less than 2 cm² remains unimpregnated with electrolyte solution in electrode
D: Portion of 2 cm² or more remains unimpregnated with electrolyte solution in electrode

### <Blocking resistance>

A separator that was the same as the separator including a functional layer at one side that was formed in evaluation of "Adhesiveness after immersion in electrolyte solution" was cut to a square shape of 5 cm in width by 5 cm in length to obtain two square pieces. Next, the two square pieces were overlapped with the respective surfaces at which a functional layer had been formed on a separator substrate facing each other, were placed under 0.1 MPa of pressure at a temperature of 40°C, and were left in this state for 24 hours to produce a test specimen in a pressed state (pressed test specimen). The state of adhesion of the two overlapped square pieces in the pressed test specimen after being left for 24 hours was visually checked, and blocking resistance was evaluated in accordance with the following standard. Note that in a case in which the two overlapped square pieces were adhered to each other, the entirety of one of the two square pieces was fixed in place, and the other of the square pieces was pulled with a force of 0.3 N/m in order to confirm whether the square pieces could be peeled apart. Less adhesion of the two overlapped square pieces indicates that the separator including a functional layer has better blocking resistance.
A: Two square pieces are not adhered
B: Two square pieces are adhered but can be peeled apart when pulled
C: Two square pieces are adhered and cannot be peeled apart when pulled

### <High-temperature cycle characteristics>

A secondary battery produced in each example or comparative example was left at rest in a 25°C environment for 24 hours after injection of electrolyte solution. The thickness of the battery at this time was measured by a caliper. Next, the secondary battery was subjected to a charge/discharge operation of charging to 4.2 V by a constant current-constant voltage (CC-CV) method with a charge rate of 1C (cut-off condition: 0.02C) and then discharging to 3.0 V by a constant current (CC) method with a discharge rate of 1C at 25°C. In addition, the same charge/discharge operation was repeated in a 45°C environment, and the thickness of the battery after 300 cycles was measured using a caliper. The proportional increase of thickness of the battery after cycling relative to before cycling was evaluated as a swelling property of the battery. A smaller proportional increase of the thickness of the battery after cycling relative to before cycling indicates a better swelling property.
A: Proportional increase of battery thickness after cycling relative to before cycling of less than 1%
B: Proportional increase of battery thickness after cycling relative to before cycling of not less than 1% and less than 5%
C: Proportional increase of battery thickness after cycling relative to before cycling of 5% or more

### <Rate characteristics>

A secondary battery produced in each example or comparative example was left at rest at a temperature of 25°C for 5 hours after injection of electrolyte solution. Next, the secondary battery was charged to a cell voltage of 3.65 V by a 0.2C constant-current method at a temperature of 25°C and was then subjected to 12 hours of aging at a temperature of 60°C. The secondary battery was subsequently discharged to a cell voltage of 3.00 V by a 0.2C constant-current method at a temperature of 25°C. Thereafter, CC-CV charging of the secondary battery was performed with a 0.2C constant current (upper limit cell voltage: 4.35 V) and CC discharging of the secondary battery was performed to a cell voltage of 3.00 V with a 0.2C constant current. This charging and discharging at 0.2C was repeated three times.

Next, constant-current charging and discharging at 0.2C was performed between cell voltages of 4.2 V and 3.00 V in an environment having a temperature of 25°C, and the discharge capacity at this time was defined as C0. Thereafter, the secondary battery was CC-CV charged with a 0.2C constant current in the same manner, was then discharged to 3.0 V with a 0.5C constant current in an environment having a temperature of -10°C, and the discharge capacity at this time was defined as C1. A capacity maintenance rate expressed by ΔC = (C1/C0) × 100(%) was determined as a rate characteristic and was evaluated by the following standard. A larger value for this capacity maintenance rate ΔC indicates lower internal resistance and higher discharge capacity at high current in a low temperature environment.
A: Capacity maintenance rate ΔC of 70% or more
B: Capacity maintenance rate ΔC of less than 70%

### (Example 1)

### <Production of particulate polymer>

A polymer having a core-shell structure was produced as a particulate polymer.

In core portion formation, a 5 MPa pressure-resistant vessel equipped with a stirrer was charged with 45.7 parts of styrene as an aromatic monovinyl monomer, 28.2 parts of 2-ethylhexyl acrylate as a (meth)acrylic acid ester monomer, 8.5 parts of acrylonitrile as a nitrile group-containing monomer, 0.1 parts of ethylene glycol dimethacrylate as a cross-linkable monomer, 2.5 parts of methacrylic acid as an acidic group-containing monomer, 0.3 parts of sodium dodecylbenzenesulfonate as an emulsifier, 150 parts of deionized water, and 0.3 parts of potassium persulfate as a polymerization initiator. These materials were thoroughly stirred and were subsequently heated to 70°C to initiate polymerization. Polymerization was continued until a polymerization conversion rate of 96% was reached to yield a water dispersion containing a particulate polymer forming a core portion. Next, at the point at which the polymerization conversion rate reached 96%, 10.0 parts of styrene as an aromatic monovinyl monomer, 4.5 parts of acrylonitrile as a nitrile group-containing monomer, and 0.5 parts of methacrylic acid as an acidic group-containing monomer were continuously added for shell portion formation, the temperature was raised to 70°C, and polymerization was continued. At the point at which the conversion rate reached 96%, cooling was performed to quench the reaction to yield a water dispersion of a particulate polymer. The obtained particulate polymer had a core-shell structure in which the outer surface of a core portion was partially covered by a shell portion.

The glass-transition temperature and volume-average particle diameter of the obtained particulate polymer were measured. The results are shown in Table 1.

### <Production of binder for functional layer>

A 5 MPa pressure-resistant vessel equipped with a stirrer was charged with 62.2 parts of styrene as an aromatic monovinyl monomer, 33.0 parts of 1,3-butadiene as an aliphatic conjugated diene monomer, 3.8 parts of itaconic acid as an acidic group-containing monomer, 1 part of 2-hydroxyethyl acrylate as a hydroxy group-containing monomer, 0.4 parts of sodium dodecylbenzenesulfonate as an emulsifier, 150 parts by mass of deionized water, and 0.5 parts of potassium persulfate as a polymerization initiator. These materials were thoroughly stirred and were subsequently heated to 50°C to initiate polymerization. At the point at which the polymerization conversion rate reached 96%, cooling was performed to quench the reaction to yield a mixture containing a polymer. The mixture containing the polymer was adjusted to pH 8 through addition of 5% sodium hydroxide aqueous solution and was then subjected to thermal-vacuum distillation to remove unreacted monomer from the mixture. Thereafter, the mixture was cooled to 30°C or lower to yield a water dispersion of a binder for a functional layer.

The glass-transition temperature of the obtained binder for a functional layer was measured. The result is shown in Table 1.

### <Production of aqueous solution containing water-soluble polymer>

A 10 L septum-equipped flask was charged with 6,335 g of deionized water and 170 g of a 2.0% aqueous solution of L-ascorbic acid as a polymerization accelerator, these materials were heated to a temperature of 40°C, and the inside of the flask was purged with nitrogen gas at a flow rate of 100 mL/min. Next, 468 g (36.0 mass%) of acrylic acid as an acidic group-containing monomer, 676 g (52.0 mass%) of acrylonitrile as a nitrile group-containing monomer, and 156 g (12.0 mass%) of 2-acrylamido-2-methylpropane sulfonic acid as a sulfo group-containing monomer were mixed and were injected into the flask using a syringe. Thereafter, 180 g of a 5.0% aqueous solution of ammonium persulfate as a polymerization initiator was added into the flask using a syringe, and the reaction temperature was set to 60°C. After 2 hours, 90 g of a 5.0% aqueous solution of ammonium persulfate as a polymerization initiator and 85 g of a 2.0% aqueous solution of L-ascorbic acid as a polymerization accelerator were added into the flask in order to further increase the reaction conversion rate. After a further 2 hours, 90 g of a 5.0% aqueous solution of ammonium persulfate as a polymerization initiator and 85 g of a 2.0% aqueous solution of L-ascorbic acid as a polymerization accelerator were added into the flask. After 2 hours, 34 g of a 5% aqueous solution of sodium nitrite as a reaction inhibitor was added into the flask and was stirred. Thereafter, the flask was cooled to 40°C and was converted to an air atmosphere. The pH of the system was adjusted to 8.0 using 8% lithium hydroxide aqueous solution to produce an aqueous solution containing a water-soluble polymer.

### <Production of slurry composition for non-aqueous secondary battery functional layer>

A mixture was obtained by mixing 100 parts (in terms of solid content) of the water dispersion of the particulate polymer, 10 parts (in terms of solid content) of the water dispersion of the binder for a functional layer, 2 parts (in terms of solid content) of the water dispersion of the water-soluble polymer, and 2 parts (in terms of solid content) of NOPTECHS^{®} ED-052 (NOPTECHS is a registered trademark in Japan, other countries, or both; produced by San Nopco Limited) as a wetting agent in a stirring vessel.

The obtained mixture was diluted with deionized water to obtain a slurry composition (solid content concentration: 10%). This slurry composition was used to produce a separator including a functional layer at one side, and then adhesiveness of the functional layer after immersion in electrolyte solution and blocking resistance of the separator including the functional layer were evaluated. The results are shown in Table 1.

### <Production of separator including functional layers at both sides>

A microporous membrane made of polyethylene (produced by Asahi Kasei Corporation; product name: ND412; thickness: 12 µm) was prepared. A ceramic slurry (produced by Zeon Corporation; product name: BM-2000M; containing alumina as heat-resistant particles and a binder) was applied onto the surface of the prepared microporous membrane and was dried at a temperature of 50°C for 3 minutes to obtain a separator substrate including a porous membrane layer at one side (porous membrane layer thickness: 3 µm).

The slurry composition for a non-aqueous secondary battery functional layer described above was applied onto a surface at the porous membrane layer-side of the separator substrate described above and was dried at a temperature of 50°C for 3 minutes. The same operation was performed with respect to the other surface of the separator substrate to obtain a separator including functional layers at both sides (functional layer thickness: each 0.6 µm).

### <Production of negative electrode>

A 5 MPa pressure-resistant vessel equipped with a stirrer was charged with 33 parts of 1,3-butadiene as an aliphatic conjugated diene monomer, 3.5 parts of itaconic acid as an acidic group-containing monomer, 63.5 parts of styrene as an aromatic monovinyl monomer, 0.4 parts of sodium dodecylbenzenesulfonate as an emulsifier, 150 parts of deionized water, and 0.5 parts of potassium persulfate as a polymerization initiator. These materials were thoroughly stirred and were subsequently heated to 50°C to initiate polymerization. At the point at which the polymerization conversion rate reached 96%, cooling was performed to quench the polymerization reaction to yield a mixture containing a particulate binder (styrene-butadiene copolymer). The mixture was adjusted to pH 8 through addition of 5% sodium hydroxide aqueous solution and was then subjected to thermal-vacuum distillation to remove unreacted monomer. Thereafter, the mixture was cooled to 30°C or lower to yield a water dispersion containing a binder for a negative electrode.

A planetary mixer was charged with 48.75 parts of artificial graphite (theoretical capacity: 360 mAh/g) and 48.75 parts of natural graphite (theoretical capacity: 360 mAh/g) as negative electrode active materials and 1 part in terms of solid content of carboxymethyl cellulose as a thickener. These materials were diluted to a solid content concentration of 60% with deionized water and were then kneaded at a rotation speed of 45 rpm for 60 minutes. Thereafter, 1.5 parts in terms of solid content of the water dispersion containing the binder for a negative electrode obtained as described above was added and was kneaded therewith at a rotation speed of 40 rpm for 40 minutes. The viscosity was adjusted to 3,000 ± 500 mPa·s (measured by B-type viscometer at 25°C and 60 rpm) through addition of deionized water to produce a slurry composition for a negative electrode mixed material layer.

The slurry composition for a negative electrode mixed material layer was applied onto the surface of copper foil of 15 µm in thickness serving as a current collector by a comma coater such as to have a coating weight of 11 ± 0.5 mg/cm². Thereafter, the copper foil with the slurry composition for a negative electrode mixed material layer applied thereon was conveyed inside an oven having a temperature of 80°C for 2 minutes and an oven having a temperature of 110°C for 2 minutes at a speed of 400 mm/min so as to dry the slurry composition on the copper foil and obtain a negative electrode web having a negative electrode mixed material layer formed on the current collector.

The negative electrode mixed material layer-side of the produced negative electrode web was subsequently roll pressed under a condition of a line pressure of 11 t (tons) in an environment having a temperature of 25 ± 3°C to obtain a negative electrode having a negative electrode mixed material layer density of 1.60 g/cm³. Thereafter, the negative electrode was left in an environment having a temperature of 25 ± 3°C and a relative humidity of 50 ± 5% for 1 week.

### <Production of positive electrode>

A slurry composition for a positive electrode mixed material layer was produced by adding 96 parts of a lithium complex oxide of Co-Ni-Mn (CELLSEED^{®} (CELLSEED is a registered trademark in Japan, other countries, or both); NMC111; LiNi_{1/3}Co_{1/3}Mn_{1/3}O₂) as a positive electrode active material, 2 parts of acetylene black (produced by Denka Company Limited; product name: HS-100) as a conductive material, and 2 parts of polyvinylidene fluoride (produced by Kureha Corporation; product name: KF-1100) as a binder into a planetary mixer, further adding N-methyl-2-pyrrolidone (NMP) as a dispersion medium so as to adjust the total solid content concentration to 67%, and mixing these materials.

Next, the obtained slurry composition for a positive electrode mixed material layer was applied onto aluminum foil of 20 µm in thickness serving as a current collector by a comma coater such as to have a coating weight of 20 ± 0.5 mg/cm².

The aluminum foil was conveyed inside an oven having a temperature of 90°C for 2 minutes and an oven having a temperature of 120°C for 2 minutes at a speed of 200 mm/min so as to dry the slurry composition on the aluminum foil and obtain a positive electrode web having a positive electrode mixed material layer formed on the current collector.

The positive electrode mixed material layer-side of the produced positive electrode web was subsequently roll pressed under a condition of a line pressure of 14 t (tons) in an environment having a temperature of 25 ± 3°C to obtain a positive electrode having a positive electrode mixed material layer density of 3.40 g/cm³. Thereafter, the positive electrode was left in an environment having a temperature of 25 ± 3°C and a relative humidity of 50 ± 5% for 1 week.

### <Production of secondary battery>

A wound cell (discharge capacity equivalent to 520 mAh) was produced using the separator including functional layers at both sides, the negative electrode, and the positive electrode that were obtained as described above and was arranged inside of aluminum packing. The wound cell, together with the aluminum packing, was pressed at a temperature of 70°C and a pressure of 1.0 MPa for 8 seconds using a hot flat-plate pressing machine so as to adhere the separator and the electrodes (negative electrode and positive electrode).

Thereafter, electrolyte solution was loaded into the aluminum packing. Note that the electrolyte solution was a solution obtained by dissolving LiPF₆ (supporting electrolyte) with a concentration of 1 mol/L in a mixed solvent of ethylene carbonate (EC), diethyl carbonate (DEC), and vinylene carbonate (VC) (volume ratio: EC/DEC/VC = 68.5/30/1.5). The aluminum packing was then closed by heat sealing at a temperature of 150°C to tightly seal an opening of the aluminum packing and thereby produce a lithium ion secondary battery. This lithium ion secondary battery was used to evaluate electrolyte solution injectability, rate characteristics, and cycle characteristics. The results are shown in Table 1.

### (Examples 2 and 3)

Various operations were performed in the same way as in Example 1 with the exception that in production of the particulate polymer, the types and proportions of monomers used in core portion formation were changed as indicated in Table 1. The obtained particulate polymer had a core-shell structure in which the outer surface of a core portion was partially covered by a shell portion. Moreover, various measurements and evaluations were performed in the same way as in Example 1. The results are shown in Table 1.

### (Example 4)

A polymer not having a core-shell structure was produced as a particulate polymer.

A 5 MPa pressure-resistant vessel equipped with a stirrer was charged with 65.5 parts of styrene as an aromatic monovinyl monomer, 24.0 parts of butyl acrylate as a (meth)acrylic acid ester monomer, 0.5 parts of ethylene glycol dimethacrylate and 10.0 parts of glycidyl methacrylate as cross-linkable monomers, 0.3 parts of sodium dodecylbenzenesulfonate as an emulsifier, 150 parts of deionized water, and 0.3 parts of potassium persulfate as a polymerization initiator. These materials were thoroughly stirred and were then heated to 70°C to initiate polymerization. Polymerization was continued until a polymerization conversion rate of 96% was reached to yield a water dispersion containing a particulate polymer that did not have a core-shell structure.

With the exception of this point, various operations, measurements, and evaluations were performed in the same way as in Example 1. The results are shown in Table 1.

### (Example 5)

A polymer not having a core-shell structure was produced in the same way as in Example 4 with the exception that the production conditions of the particulate polymer were changed such that the volume-average particle diameter of the obtained particulate polymer was 4 µm. In production of a slurry composition, a mixture was obtained by mixing 30 parts (in terms of solid content) of the water dispersion of the particulate polymer obtained in this manner, 3 parts (in terms of solid content) of the water dispersion of the binder for a functional layer, 0.6 parts (in terms of solid content) of the water dispersion of the water-soluble polymer, 70 parts of alumina (AKP-3000 produced by Sumitomo Chemical Co., Ltd.; volume-average particle diameter D50: 0.7 µm) as heat-resistant particles, and 0.2 parts (in terms of solid content) of NOPTECHS^{®} ED-52 (produced by San Nopco Limited) as a wetting agent in a stirring vessel.

The obtained mixture was diluted with deionized water to obtain a slurry composition (solid content concentration: 40%). This slurry composition was used to produce a separator including a functional layer at one side, and then adhesiveness of the functional layer after immersion in electrolyte solution and blocking resistance of the separator including the functional layer were evaluated. The results are shown in Table 1. Moreover, the slurry composition obtained in this manner was used to perform various operations, measurements, and evaluations in the same way as in Example 1. The results are shown in Table 1.

### (Example 6)

Various operations, measurements, and evaluations were performed in the same way as in Example 1 with the exception that a particulate polymer produced as described below was used as a binder for a functional layer. The results are shown in Table 1.

### <Production of binder for functional layer>

A reactor including a stirrer was supplied with 70 parts of deionized water, 0.15 parts of sodium lauryl sulfate (produced by Kao Corporation; product name: EMAL^{®} 2F (EMAL is a registered trademark in Japan, other countries, or both)) as an emulsifier, and 0.5 parts of ammonium persulfate. The gas phase was purged with nitrogen gas, and the temperature was raised to 60°C.

A monomer composition was obtained in a separate vessel by mixing 50 parts of deionized water, 0.5 parts of sodium dodecylbenzenesulfonate as a dispersant, 79.0 parts of n-butyl acrylate as a (meth)acrylic acid ester monomer, 2.5 parts of methacrylic acid as an acidic group-containing monomer, 3.5 parts of N-methylolacrylamide as a cross-linkable monomer, and 15.0 parts of acrylonitrile as a nitrile group-containing monomer. The monomer composition was continuously added into the reactor over 4 hours to perform polymerization. The reaction was carried out at 60°C during the addition. Once the addition was complete, a further 3 hours of stirring was performed at 70°C, and then the reaction was ended to produce a water dispersion containing a binder for a functional layer.

### (Example 7)

Various operations, measurements, and evaluations were performed in the same way as in Example 1 with the exception that a particulate polymer produced as described below was used as a binder for a functional layer. The results are shown in Table 1.

### <Production of binder for functional layer>

The chemical composition of the monomer composition used in production of the binder for a functional layer was changed as indicated in Table 1. Specifically, the amounts of n-butyl acrylate and acrylonitrile were reduced as indicated in Table 1, and 15 parts of glycidyl methacrylate was compounded in addition to 3.5 parts of N-methylolacrylamide as a cross-linkable monomer. With the exception of this point, a water dispersion containing a binder for a functional layer was produced in the same way as in Example 6.

### (Examples 8 to 11)

The chemical composition of the monomer composition in production of the water-soluble polymer was changed as indicated in Table 1 or 2. In Example 11, styrene sulfonic acid was used instead of 2-acrylamido-2-methylpropane sulfonic acid as a sulfo group-containing monomer. With the exception of these points, various operations, measurements, and evaluations were performed in the same way as in Example 1. The results are shown in Table 1 or 2.

### (Example 12)

Various operations, measurements, and evaluations were performed in the same way as in Example 1 with the exception that in production of the water-soluble polymer, the amounts of ammonium persulfate and L-ascorbic acid were increased such that the weight-average molecular weight of the water-soluble polymer was a value indicated in Table 2. The results are shown in Table 2.

### (Example 13)

Various operations, measurements, and evaluations were performed in the same way as in Example 1 with the exception that in production of the water-soluble polymer, the amounts of ammonium persulfate and L-ascorbic acid were decreased such that the weight-average molecular weight of the water-soluble polymer was a value indicated in Table 2. The results are shown in Table 2.

### (Example 14)

Various operations, measurements, and evaluations were performed in the same way as in Example 1 with the exception that polyvinyl acetate (Polyvinyl Acetate produced by Techno Chemical Corp.), which is a homopolymer, was used as a particulate polymer. The results are shown in Table 2.

### (Comparative Example 1)

Various operations, measurements, and evaluations were performed in the same way as in Example 1 with the exception that a particulate polymer was not compounded. The results are shown in Table 2.

### (Comparative Example 2)

Various operations, measurements, and evaluations were performed in the same way as in Example 1 with the exception that a particulate polymer having a glass-transition temperature of higher than 95°C that was produced by changing the chemical composition of the monomer composition as indicated in Table 2 in production of the particulate polymer was used. The obtained particulate polymer had a core-shell structure in which the outer surface of a core portion was partially covered by a shell portion. The results are shown in Table 2.

### (Comparative Example 3)

The chemical composition of the monomer composition in production of the particulate polymer was changed as indicated in Table 2, and polyacrylic acid synthesized according to the same method as in Example 1 with only acrylic acid compounded as a monomer was used as a water-soluble polymer. With the exception of these points, various operations, measurements, and evaluations were performed in the same way as in Example 1. The obtained particulate polymer had a core-shell structure in which the outer surface of a core portion was partially covered by a shell portion. The results are shown in Table 2.

### (Comparative Example 4)

The chemical composition of the monomer composition in production of the particulate polymer was changed as indicated in Table 2, and the chemical composition of the monomer composition in production of the water-soluble polymer was changed as indicated in Table 2. With the exception of these points, various operations, measurements, and evaluations were performed in the same way as in Example 1. The obtained particulate polymer had a core-shell structure in which the outer surface of a core portion was partially covered by a shell portion. The results are shown in Table 2.

### (Comparative Example 5)

Various operations were performed in the same way as in Example 1 with the exception that the chemical composition of the monomer composition in production of the particulate polymer was changed as indicated in Table 2 such that the glass-transition temperature changed to 20°C. The obtained particulate polymer had a core-shell structure in which the outer surface of a core portion was partially covered by a shell portion. Moreover, various measurements and evaluations were performed in the same way as in Example 1. The results are shown in Table 2.

In Tables 1 and 2, shown below:
"ST" indicates styrene unit;
"EDMA" indicates ethylene glycol methacrylate unit;
"AMA" indicates allyl methacrylate unit;
"GMA" indicates glycidyl methacrylate unit;
"NMA" indicates N-methylolacrylamide unit;
"MAA" indicates methacrylic acid unit;
"2EHA" indicates 2-ethylhexyl acrylate unit;
"BA" indicates n-butyl acrylate unit;
"AN" indicates acrylonitrile unit;
"MMA" indicates methyl methacrylate unit;
"IA" indicates itaconic acid unit;
"BD" indicates 1,3-butadiene unit;
"βHEA" indicates 2-hydroxyethyl acrylate unit;
"AMPS" indicates 2-acrylamido-2-methylpropane sulfonic acid unit; and
"SS" indicates styrene sulfonic acid unit.

**[Table 1]**

| | | | | | Example 1 | Example 2 | Example 3 | Example 4 | Example 5 | Example 6 | Example 7 | Example 8 |
|---|---|---|---|---|---|---|---|---|---|---|---|---|
| | | Type | | | Core-shell structure copolymer | | | Non-core-shell copolymer | | Core-shell structure copolymer | | |
| | | Chemical composition (core) (mass%) * chemical composition of copolymer for non-core-shell | Aromatic monovinyl unit | ST | 45.7 | 53.1 | 35.9 | 65.5 | 65.5 | 45.7 | 45.7 | 45.7 |
| | | | (Meth)acrylic acid ester unit | 2EHA | 28.2 | 20.8 | 37.9 | - | - | 28.2 | 28.2 | 28.2 |
| | | | Nitrile group-containing unit | AN | 8.5 | 8.5 | 8.5 | - | - | 9 | 9 | 9 |
| | | | Cross-linkable unit | EDMA | 0.1 | 0.1 | 0.1 | 0.5 | 0.5 | 0.1 | 0.1 | 0.1 |
| | | | Acidic group-containing unit | MAA | 2.5 | 2.6 | 2.6 | - | - | 2.5 | 2.5 | 2.5 |
| | Particulate polymer | | (Meth)acrylic acid ester unit | BA | - | - | - | 24 | 24 | - | - | - |
| | | | Cross-linkable unit | GMA | - | - | - | 10 | 10 | - | - | - |
| | | Chemical composition (shell) (mass%) | Aromatic monovinyl unit | ST | 10 | 10 | 10 | - | - | 10 | 10 | 10 |
| | | | Nitrile group-containing unit | AN | 4.5 | 4.5 | 4.5 | - | - | 4.5 | 4.5 | 4.5 |
| | | | Acidic group-containing unit | MAA | 0.5 | 0.5 | 0.5 | - | - | 0.5 | 0.5 | 0.5 |
| | | Glass-transition temperature (°C) | | | 54 | 74 | 38 | 70 | 70 | 54 | 54 | 54 |
| | | Volume-average particle diameter D50 (µm) | | | 0.7 | 0.7 | 0.7 | 0.5 | 4 | 0.7 | 0.7 | 0.7 |
| | | Amount (parts by mass) | | | 100 | 100 | 100 | 100 | 30 | 100 | 100 | 100 |
| | | Type | | | Aromatic vinyl polymer | | | | | Acrylic polymer | | Aromatic vinyl polymer |
| Slurry composition for functional layer | | Chemical composition (mass%) | Aromatic monovinyl unit | ST | 62.2 | 62.2 | 62.2 | 62.2 | 62.2 | - | - | 62.2 |
| | | | Aliphatic conjugated diene unit | BD | 33 | 33 | 33 | 33 | 33 | - | - | 33 |
| | | | Acidic group-containing unit | IA | 3.8 | 3.8 | 3.8 | 3.8 | 3.8 | - | - | 3.8 |
| | Binder for functional layer | | Hydroxy group-containing unit | βHEA | 1 | 1 | 1 | 1 | 1 | - | - | 1 |
| | | | Acidic group-containing unit | MAA | - | - | - | - | - | 2.5 | 2.5 | - |
| | | | (Meth)acrylic acid ester unit | BA | - | - | - | - | - | 79 | 70 | - |
| | | | Nitrile group-containing unit | AN | - | - | - | - | - | 15 | 9 | - |
| | | | Cross-linkable unit | NMA | - | - | - | - | - | 3.5 | 3.5 | - |
| | | | | GMA | - | - | - | - | - | - | 15 | - |
| | | Glass-transition temperature (°C) | | | 12 | 12 | 12 | 12 | 12 | -8 | -12 | 12 |
| | | Amount (parts by mass) | | | 10 | 10 | 10 | 10 | 3 | 10 | 10 | 10 |
| | | Chemical composition (mass%) | Acidic group-containing unit | AA | 36 | 36 | 36 | 36 | 36 | 36 | 36 | 45 |
| | | | Nitrile group-containing unit | AN | 52 | 52 | 52 | 52 | 52 | 52 | 52 | 52 |
| | Water-soluble polymer | | Sulfo group-containing unit | AMPS | 12 | 12 | 12 | 12 | 12 | 12 | 12 | 3 |
| | | | | SS | - | - | - | - | - | - | - | - |
| | | Weight-average molecular weight (-) | | | 400000 | 400000 | 400000 | 400000 | 400000 | 400000 | 400000 | 400000 |
| | | Amount (parts by mass) | | | 2 | 2 | 2 | 2 | 0.6 | 2 | 2 | 2 |
| | | Type | | | - | - | - | - | Alumina | - | - | - |
| | Heat-resistant particles | Volume-average particle diameter (µm) | | | - | - | - | - | 0.5 | - | - | - |
| | | Amount (parts by mass) | | | - | - | - | - | 70 | - | - | - |
| | Adhesiveness after immersion in electrolyte solution | | | | A | B | A | B | B | A | A | B |
| | Electrolyte solution injectability | | | | A | A | A | A | A | A | A | A |
| Evaluation | Blocking resistance | | | | A | A | B | A | A | A | B | A |
| | High-temperature cycle characteristics | | | | A | B | A | B | B | A | A | B |
| | Rate characteristics | | | | A | A | A | A | B | A | A | A |

**[Table 2]**

| | | | | | Example 9 | Example 10 | Example 11 | Example 12 | Example 13 | Example 14 | Comparative Example 1 | Comparative Example 2 | Comparative Example 3 | Comparative Example 4 | Comparative Example 5 |
|---|---|---|---|---|---|---|---|---|---|---|---|---|---|---|---|
| | | Type | | | Core-shell structure copolymer | | | | | Polyvinyl acetate | None | Core-shell structure copolymer | | | |
| | | | Aromatic monovinyl unit | ST | 45.7 | 45.7 | 45.7 | 45.7 | 45.7 | - | - | 51.5 | 37.6 | 37.6 | 22 |
| | | | (Meth)acrvlic acid ester unit | 2EHA | 28.2 | 28.2 | 28.2 | 28.2 | 28.2 | - | - | 9.3 | 23.2 | 23.2 | 38.8 |
| | | | Nitrile group-containing unit | AN | 9 | 9 | 9 | 9 | 9 | - | - | 7 | 7 | 7 | 7 |
| | | Chemical composition (core) (mass%) *chemical composition of copolymer for non-core-shell | Cross-linkable unit | EDMA | 0.1 | 0.1 | 0.1 | 0.1 | 0.1 | - | - | 0.1 | 0.1 | 0.1 | 0.1 |
| | | | Acidic group-containing unit | MAA | 2.5 | 2.5 | 2.5 | 2.5 | 2.5 | - | - | 2.1 | 2.1 | 2.1 | 2.1 |
| | Particulate polymer | | (Meth)acrvlic acid ester unit | BA | - | - | - | - | - | - | - | - | - | - | - |
| | | | Cross-linkable unit | GMA | - | - | - | - | - | - | - | - | - | - | - |
| Slurry composition for functional layer | | | Aromatic monovinyl unit | ST | 10 | 10 | 10 | 10 | 10 | - | - | 28.2 | 28.2 | 28.2 | 28.2 |
| | | Chemical composition (shell) (mass%) | Nitrile group-containing unit | AN | 4.5 | 4.5 | 4.5 | 4.5 | 4.5 | - | - | 1.5 | 1.5 | 1.5 | 1.5 |
| | | | Acidic group-containing unit | MAA | 0.5 | 0.5 | 0.5 | 0.5 | 0.5 | - | - | 0.3 | 0.3 | 0.3 | 0.3 |
| | | Glass-transition temperature (°C) | | | 54 | 54 | 54 | 54 | 54 | 32 | - | 108 | 54 | 54 | 20 |
| | | Volume-average particle diameter D50 (µm) | | | 0.7 | 0.7 | 0.7 | 0.7 | 0.7 | 0.7 | - | 0.7 | 0.7 | 0.7 | 0.7 |
| | | Amount (parts by mass) | | | 100 | 100 | 100 | 100 | 100 | 100 | - | 100 | 100 | 100 | 100 |
| | | Type | | | Aromatic vinyl polymer | | | | | | Aromatic vinyl polymer | | | | |
| | | | Aromatic monovinyl unit | ST | 622 | 622 | 622 | 622 | 62.2 | 62.2 | 62.2 | 62.2 | 62.2 | 622 | 62.2 |
| | | | Aliphatic coniueated diene unit | BD | 33 | 33 | 33 | 33 | 33 | 33 | 33 | 33 | 33 | 33 | 33 |
| | | | Acidic group-containing unit | IA | 3.8 | 3.8 | 3.8 | 3.8 | 3.8 | 3.8 | 3.8 | 3.8 | 3.8 | 3.8 | 3.8 |
| | | | Hydroxy group-containing unit | βHEA | 1 | 1 | 1 | 1 | 1 | 1 | 1 | 1 | 1 | 1 | 1 |
| | Binder for functional layer | Chemical composition (mass%) | Acidic group-containing unit | MAA | - | - | - | - | - | - | - | - | - | - | - |
| | | | (Meth)acrvlic acid ester unit | BA | - | - | - | - | - | - | - | - | - | - | - |
| | | | Nitrile group-containing unit | AN | - | - | - | - | - | - | - | - | - | - | - |
| | | | Cross-linkable unit | NMA | - | - | - | - | - | - | - | - | - | - | - |
| | | | | GMA | - | - | - | - | - | - | - | - | - | - | - |
| | | Glass-transition temperature (°C) | | | 12 | 12 | 12 | 12 | 12 | 12 | 12 | 12 | 12 | 12 | 12 |
| | | Amount (parts by mass) | | | 10 | 10 | 10 | 10 | 10 | 10 | 10 | 10 | 10 | 10 | 10 |
| | | | Acidic group-containing unit | AA | 36 | 55 | 36 | 36 | 36 | 36 | 36 | 36 | 100 | 45 | 36 |
| | | Chemical composition (mass%) | Nitrile group-containing unit | AN | 43 | 35 | 52 | 52 | 52 | 52 | 52 | 52 | - | 54 | 52 |
| | Water-soluble polymer | | Sulfo group-containing unit | AMPS | 21 | 10 | - | 12 | 12 | 12 | 12 | 12 | - | 1 | 12 |
| | | | | SS | - | - | 12 | - | - | - | - | - | - | - | - |
| | | Weight-average molecular weight (-) | | | 400000 | 400000 | 400000 | 150000 | 600000 | 400000 | 400000 | 400000 | 400000 | 400000 | 400000 |
| | | Amount (parts by mass) | | | 2 | 2 | 2 | 2 | 2 | 2 | 2 | 2 | 2 | 2 | 2 |
| | Heat-resistant particles | Type | | | - | - | - | - | - | - | - | - | - | - | - |
| | | Volume-average particle diameter (µm) | | | - | - | - | - | - | - | - | - | - | - | - |
| | | Amount (parts by mass) | | | - | - | - | - | - | - | - | - | - | - | - |
| | Adhesiveness after immersion in electrolyte solution | | | | A | A | B | B | A | B | D | C | C | B | A |
| | Electrolyte solution injectability | | | | A | A | A | A | A | A | D | A | A | C | A |
| Evaluation | Blocking resistance | | | | A | A | A | A | A | B | A | A | A | B | C |
| | High-temperature cycle characteristics | | | | A | B | B | B | A | B | C | C | c | B | A |
| | Rate characteristics | | | | B | A | A | A | B | A | B | A | A | A | B |

It can be seen from Tables 1 and 2 that a functional layer having excellent blocking resistance and a non-aqueous secondary battery having excellent electrolyte solution injectability and high-temperature cycle characteristics were obtained in Examples 1 to 14 in which the used slurry composition for a functional layer contained a particulate polymer having a glass-transition temperature of not lower than 30°C and not higher than 95°C and a water-soluble polymer including a sulfo group-containing monomer unit in a proportion of 3 mass% or more.

In contrast, it can be seen that a functional layer having excellent blocking resistance and a non-aqueous secondary battery having excellent electrolyte solution injectability and high-temperature cycle characteristics were not obtained in Comparative Example 1 in which a specific particulate polymer was not compounded, Comparative Examples 2 and 5 in which a particulate polymer was compounded but had a glass-transition temperature outside of the specific range set forth above, Comparative Example 3 in which a water-soluble polymer did not include a sulfo group-containing monomer unit, and Comparative Example 4 in which a water-soluble polymer included a sulfo group-containing monomer unit in a proportion of less than 3 mass%.

### INDUSTRIAL APPLICABILITY

According to the present disclosure, it is possible to provide a slurry composition for a non-aqueous secondary battery functional layer that is capable of providing a functional layer having excellent blocking resistance and that is also capable of providing a secondary battery in which high levels of both electrolyte solution injectability and high-temperature cycle characteristics can be realized.

Moreover, according to the present disclosure, it is possible to provide a separator for a non-aqueous secondary battery that has excellent blocking resistance and that makes it possible to realize high levels of both electrolyte solution injectability and high-temperature cycle characteristics of an obtained secondary battery.

Furthermore, according to the present disclosure, it is possible to provide a non-aqueous secondary battery having excellent electrolyte solution injectability and high-temperature cycle characteristics.

## Claims

1. A slurry composition for a non-aqueous secondary battery functional layer comprising a particulate polymer and a water-soluble polymer, wherein
the particulate polymer has at least one glass-transition temperature of not lower than 30°C and not higher than 95°C, and
the water-soluble polymer includes a sulfo group-containing monomer unit in a proportion of 3.0 mass% or more.

2. The slurry composition for a non-aqueous secondary battery functional layer according to claim 1, wherein the particulate polymer has a core-shell structure.

3. The slurry composition for a non-aqueous secondary battery functional layer according to claim 1, wherein the particulate polymer has a volume-average particle diameter of not less than 0.25 µm and not more than 5 µm.

4. The slurry composition for a non-aqueous secondary battery functional layer according to claim 1, wherein the water-soluble polymer has a weight-average molecular weight of not less than 50,000 and not more than 1,000,000.

5. The slurry composition for a non-aqueous secondary battery functional layer according to claim 1, further comprising heat-resistant particles.

6. A separator for a non-aqueous secondary battery comprising: a separator substrate; and a functional layer formed on at least part of at least one surface of the separator substrate, wherein the functional layer is a dried product of the slurry composition for a non-aqueous secondary battery functional layer according to any one of claims 1 to 5.

7. A non-aqueous secondary battery comprising a positive electrode, a negative electrode, a separator, and an electrolyte solution, wherein the separator is the separator for a non-aqueous secondary battery according to claim 6.
